# EUROPÄISCHE PATENTSCHRIFT

(11) **EP 3 180 666 B1**
(45) Veröffentlichungstag und Bekanntmachung des Hinweises auf die Patenterteilung: **25.09.2019**
(21) Anmeldenummer: 14801985.4
(22) Anmeldetag: 13.11.2014
(51) Int. Cl.: G05B 19/418

(54) **VERFAHREN ZUR PLANUNG DER HERSTELLUNG EINES PRODUKTS UND PRODUKTIONSMODUL MIT SELBSTBESCHREIBUNGS-INFORMATIONEN**
METHOD FOR PLANNING THE PRODUCTION OF A PRODUCT AND PRODUCTION MODULE HAVING SELF-DESCRIPTION INFORMATION
PROCÉDÉ DE PLANIFICATION POUR LA FABRICATION D'UN PRODUIT ET MODULE DE PRODUCTION AVEC INFORMATION D'AUTODESCRIPTION

(43) Veröffentlichungstag der Anmeldung: 21.06.2017
(73) Patentinhaber: Siemens Aktiengesellschaft, 80333 München (DE)
(72) Erfinder: LAMPARTER, Steffen, 85622 Feldkirchen (DE); LAWITZKY, Gisbert, 81477 München (DE); PIRKER, Michael, 83661 Lenggries (DE); WURM, Kai, 81739 München (DE); ZAHORCAK, Vladimir, 900 32 Borinka (SK)
(86) Internationale Anmeldenummer: PCT/EP2014/074510
(87) Internationale Veröffentlichungsnummer: WO 2016/074730

(56) Entgegenhaltungen:
- EP-A1- 2 772 856
- WO-A1-2006/075655
- DE-A1- 10 352 376
- DE-A1-102013 104 354
- US-A1- 2010 138 017

## Beschreibung

Die vorliegende Erfindung betrifft ein Produktionsmodul zur Durchführung einer Produktions-Funktion an einem Produkt, wobei das Produktionsmodul zur Kopplung mit einem zweiten Produktionsmodul ausgebildet und eingerichtet ist, welches zur Durchführung einer zweiten Produktions-Funktion an dem Produkt ausgebildet und eingerichtet ist.

Derartige Produktionsmodule sind aus dem Stand der Technik bekannt. So offenbart beispielsweise die Veröffentlichungsschrift US 2011/0224828 A1 ein System zur Entwicklung von Robotern und anderen so genannten Cyber-Physical-Systems (CPS). Das System umfasst eine Plattform, die die Ansteuerung von Aktoren und Sensoren und anderen Modulen ermöglicht. Es werden verschiedene Module offenbart, die für bestimmte, in der Robotik bekannte Aufgaben, verwendbar sind. Dies können beispielsweise der Antrieb von Motoren oder das Auslesen beziehungsweise Ansteuern von Sensoren sein. Die Module kommunizieren miteinander und mit weiteren Einrichtungen, wie beispielsweise Computern und von Anwendern erstellten Modulen über ein einheitliches Kommunikationsprotokoll. US 2010/0138017 A1 offenbart ein industrielles Kontrollsystem zur Kontrolle von Industrieprozessen auf Basis von einer Datenbank mit verallgemeinerten Produktionsplänen und Informationen über die Fähigkeiten mehrerer Kontrolleinheiten.

Es ist ein Nachteil des Standes der Technik, dass der Aufbau und die Einrichtung eines derartigen Systems recht komplex sein kann und/oder relativ viel Mitwirkung eines Benutzers bei der Erstellung und Einrichtung eines derartigen Produktionssystems erforderlich ist.

Daher ist es eine Aufgabe der vorliegenden Erfindung, den Aufbau, die Einrichtung und/oder den Betrieb eines modularen Produktionssystems zu vereinfachen.

Diese Aufgabe wird gelöst durch ein Produktionsmodul mit den Merkmalen des vorliegenden Patentanspruchs 1.

Ein derartiges Produktionsmodul ist zur Durchführung einer Produktions-Funktion an einem Produkt sowie zur Kopplung mit einem zweiten Produktionsmodul ausgebildet und eingerichtet. Dabei ist das zweite Produktionsmodul weiterhin zur Durchführung einer zweiten Produktions-Funktion an dem Produkt ausgebildet und eingerichtet. Das Produktionsmodul umfasst eine Speichereinrichtung, in welcher eine Selbstbeschreibungs-Information bezüglich Eigenschaften des Produktionsmoduls gespeichert ist. Das Produktionsmodul kann alternativ auch zur Speicherung einer Selbstbeschreibungs-Information bezüglich der Eigenschaften des Produktionsmoduls in der Speichereinrichtung ausgebildet und eingerichtet sein. Das Produktionsmodul ist weiterhin zum Übertragen der Selbstbeschreibungs-Information, oder Teilen der Selbstbeschreibungs-Information, an eine weitere Einrichtung ausgebildet und eingerichtet. Die Selbstbeschreibungs-Information ist dabei als eine so genannte NoSQL-Datenbank oder eine nicht-relationale Datenbank gespeichert oder speicherbar. Alternativ kann das Produktionsmodul auch zur Speicherung der Selbstbeschreibungs-Information als eine NoSQL-Datenbank oder nicht-relationale Datenbank ausgebildet und eingerichtet sein. Insbesondere kann die Selbstbeschreibungs-Information als eine OWL- oder RDF-Datenbank und/oder eine SPARQL als Abfragesprache verwendende Datenbank gespeichert oder speicherbar sein. Das Produktionsmodul kann alternativ auch zur Speicherung der Selbstbeschreibungs-Information in den genannten Formaten ausgebildet und eingerichtet sein.

Durch die Verwendung der NoSQL-Datenbank-Technik oder der Verwendung sogenannter nicht-relationaler Datenbanken ist es möglich, sehr komplexe Verkettungen von Begriffen und Daten vergleichsweise einfach zu erreichen. Da bei der Einrichtung eines Produktionssystems mit oben genannten Produktionsmodulen beispielsweise die Anforderungen an die Herstellung eines Produkts in Übereinstimmung mit den Fähigkeiten und Eigenschaften der Produktionsmodule gebracht werden müssen, erleichtert die Einrichtung oder den Aufbau eines derartigen Produktionssystems, dass über die Verwendung der NoSQL-Datenbanken bzw. nicht-relationalen Datenbanken derartige u.U. recht komplexe logische Begriffsketten einfacher möglich sind. So kann z.B. eine Verknüpfung von Begriffen und/oder Daten bezüglich eines Herstellungsprozesses oder -Verfahrens für das Produkt mit in der Selbstbeschreibungs-Information abgespeicherten Informationen, beispielsweise über die Produktions-Funktionen oder sonstiges-Services, Eigenschaften, Parameter usw. des Produktionsmoduls auf diese Weise vergleichsweise einfach bewerkstelligen. Damit lässt sich dann ein aus derartigen Produktionsmodulen bestehendes Produktionssystem unter Verwendung solcher NoSQL-Datenbanken oder nicht-relationaler Datenbanken vereinfachen. Dabei kann die Vereinfachung beispielsweise daraus bestehen, dass mit weniger Benutzer-Einwirkung ausgekommen werden kann oder einem Nutzer beispielsweise durch intelligente Vorschläge, der Aufbau beziehungsweise die Einrichtung eines derartigen Produktionssystems erleichtert werden kann.

Produktionsmodule können verschiedenste mechanische, elektromechanische oder elektronische Einrichtungen sein, die zur Behandlung, Bewegung, Verarbeitung und/oder Bearbeitung eines Gegenstands, Werkstücks, einer Flüssigkeit oder vergleichbaren Produkten, Baugruppen oder Materialien eingerichtet und ausgebildet sind. Produktionsmodule können beispielsweise Werkzeugmodule, Werkmaschinen (z.B. zum Fräsen, Bohren, Stanzen, Pressen, o.ä.) oder ähnliche Werkzeuge, Geräte oder Maschinen oder auch Elemente davon sein. Weiterhin können Produktionsmodule auch zum zumindest unter Anderem Transport von Produkten, Baugruppen oder Materialien ausgebildet und eingerichtet sein, beispielsweise als Förderband, Kran, Roboterarm, Pumpe oder Ähnliches. Weiterhin können Produktionsmodule auch zur Lagerung oder Zufuhr entsprechender Produkte ausgebildet und eingerichtet sein (z.B. umfassend ein Regalsystem, Tank, o.ä.). Das Produktionsmodul kann auch beispielsweise zum Erhitzen oder auch sonstigen Bearbeiten von Werkstücken, Baugruppen und/oder festen, flüssigen oder gasförmigen Materialien ausgebildet und eingerichtet sein, z.B. als Ofen, Kessel, Ventil, Rührer, o.Ä..

Das Produktionsmodul selbst kann wiederum aus mehreren Teilen, Baugruppen und/oder Unter-Modulen aufgebaut sein und/oder beispielsweise eine oder mehrere mechanische und/oder elektronische Untereinheiten aufweisen.

Ein Produktionsmodul kann beispielsweise eine Steuereinheit oder einen Controller zur Steuerung der Produktionsfunktion und/oder der in der vorliegenden Beschreibung in Bezug auf das Produktionsmodul beschriebenen Verfahren, Vorgänge und Ermittlungen ausgebildet und eingerichtet sein. Weiterhin kann das Produktionsmodul ein oder mehrere Kommunikations-schnittstellen sowie ein oder mehrere Speichereinrichtungen zur Speicherung von Daten und/oder Informationen umfassen. Zur Durchführung der Produktions-Funktion kann das Produktionsmodul zudem entsprechende mechanische, elektrische, elektronische und/oder elektromechanische oder optische Komponenten umfassen.

Insbesondere kann das Produktionsmodul als ein so genanntes "Cyber-Physcial-Systems" (CPS) oder ein Teil davon ausgebildet und eingerichtet sein. So kann das Produktionsmodul beispielsweise als ein so genanntes "Cyber-Physical-Module" (CPM) oder ein "Cyber-Physical-Production-Module" (CPPM) ausgebildet und eingerichtet sein.

Ein Produkt kann beispielsweise als ein mechanisches, optisches, elektromechanisches, elektronisches oder vergleichbares Produkt beziehungsweise Baugruppe ausgebildet und eingerichtet sein beziehungsweise derartige Produkte beziehungsweise Baugruppen umfassen. Weiterhin kann das Produkt beispielsweise als ein Werkstück, eine Baugruppe, ein festes, flüssiges oder gasförmiges Material, eine feste, flüssige oder gasförmige Chemikalie oder Ähnliches, ausgebildet sein. Das Produkt kann beispielsweise auch jegliche Art von Zwischenprodukt oder auch das Endprodukt eines bestimmten Produktionsvorgangs sein. Endprodukte können beispielsweise alle Arten von Produkten sein, die kommerziell vertrieben werden, z.B. ein Mikrochip, ein Computer, eine Kamera, ein Auto, eine Chemikalie, ein Stoff, usw., beziehungsweise auch jegliche Arten von Zwischenprodukten für derartige Produkte.

Im Rahmen der vorliegenden Beschreibung wird der Begriff "Produkt" als eine abstrakte Beschreibung eines im Rahmen einer Produktion oder Bearbeitung durchaus veränderlichen Gegenstands verwendet. Ein "Produkt" im Sinne der vorliegenden Beschreibung kann sich im Laufe eines Produktionsprozesses, beispielsweise durch die Einwirkung von Produktions-Funktionen, in seiner äußeren oder inneren Erscheinung oder Ausgestaltung durchaus verändern.

Unter einer Produktions-Funktion wird im Rahmen der vorliegenden Beschreibung allgemein jeder Vorgang, der im Rahmen der Produktion, Herstellung, Verarbeitung, Behandlung oder Bearbeitung eines Gegenstands, eines Materials oder eines Stoffes durchgeführt wird beziehungsweise durchgeführt werden kann. Eine Produktions-Funktion kann dabei z.B. jeder mögliche Arbeitsschritt bezüglich eines beliebigen Produktes von den Ausgangsstoffen bis zum fertigen Endprodukt sein.

Beispielsweise kann eine Produktions-Funktion jegliche Art von Material-Bearbeitung (z.B. Fräsen, Bohren, Schleifen, Pressen, Lackieren, Gießen, Pumpen, Erhitzen, Bewegen, Öffnen, Schließen, usw.), jegliche Art von Transport oder Bewegung oder Handhabung eines Gegenstands, einer Baugruppe, eines Materials oder eines Stoffes sein oder derartige Vorgänge umfassen. Weiterhin kann die Produktions-Funktion beispielsweise eine Lagerung, Diagnose, Prüfung, optische Aufnahme, Vermessung, Bestimmung einer Form, Lage oder Größe oder vergleichbare Funktionalitäten sein, beziehungsweise derartige Funktionalitäten umfassen.

Die Kopplung des Produktionsmoduls mit dem zweiten Produktionsmodul kann derart ausgebildet und eingerichtet sein, dass die Produktions-Funktion des Produktionsmoduls und die zweite Produktionsfunktion des zweiten Produktionsmoduls zusammenwirken können beziehungsweise zusammenwirken. Ein derartiges Zusammenwirken von Produktions-Funktionen kann beispielsweise eine gemeinsame Bearbeitung eines Produkts, eine Bearbeitung und einen Transports eines Produkts oder auch eine Übergabe eines Produkts von einer zu einer weiteren Transporteinheit sein. Zwei Produktionsmodule können dazu beispielsweise in einer geeigneten geometrischen Anordnung befindlich sein und z.B. elektronisch derart gekoppelt, dass das Zusammenwirken der Produktions-Funktionen ermöglicht beziehungsweise durchgeführt wird oder durchführbar ist.

Die Kopplung des Produktionsmoduls mit dem zweiten Produktionsmodul kann beispielsweise als eine kommunikative Kopplung über entsprechende drahtgebundene oder drahtlose Kommunikationsschnittstellen (z.B. über Ehternet, Profinet, Profibus, Feldbusse, WLAN, Bluetooth, NFC usw.) ausgebildet und eingerichtet sein beziehungsweise eine derartige kommunikative Kopplung umfassen.

Weiterhin kann die Kopplung der Produktionsmodule auch eine mechanische Kopplung, z.B. über entsprechende Verbindungselemente, umfassen. Für eine derartige mechanische Kopplung kann ein Produktionsmodul beispielsweise entsprechende Verbindungselemente, Sensoren und/oder Aktoren aufweisen beziehungsweise umfassen.

Das zweite Produktionsmodul kann beispielsweise entsprechend dem in der vorliegenden Beschreibung beschriebenen Produktionsmodul beziehungsweise ersten Produktionsmodul ausgebildet und eingerichtet sein. Weiterhin können die Produktionsmodule jeweils mit weiteren Produktionsmodulen gekoppelt sein, die wiederum jeweils entsprechend einem Produktionsmodul beziehungsweise einem ersten Produktionsmodul gemäß der vorliegenden Beschreibung ausgebildet und eingerichtet sein können. Dabei kann die Kopplung mit den jeweils anderen Produktions-modulen auch wie in der vorliegenden Beschreibung näher erläutert ausgebildet und eingerichtet sein.

Die Selbstbeschreibungs-Information bezüglich Eigenschaften des Produktionsmoduls kann beispielsweise die verschiedensten Informationen bezüglich der Produktions-Funktion des Produktionsmoduls umfassen. Insbesondere kann es beispielsweise eine Kennung beziehungsweise Charakterisierung der Funktionalität beziehungsweise Funktionalitäten umfassen, welche in der Produktions-Funktion realisiert ist bzw. sind. Weiterhin können sie Informationen über be- oder verarbeitbare Materialien beziehungsweise Gegenstände, Informationen über Größen-, Form-, Gewichts- oder ähnliche Vorgaben oder Voraussetzungen, Informationen über einen oder mehrere Bearbeitungsbereiche des Produktionsmoduls, Informationen über Qualitätskriterien, -ergebnisse und/oder Voraussetzungen bezüglich der Produktionsfunktion beziehungsweise des entsprechenden Arbeitsergebnisses oder Produkts oder ähnliche Informationen bezüglich der Produktions-Funktion umfassen.

Die Selbstbeschreibungs-Information kann zudem Information über sonstige Eigenschaften des Produktionsmoduls, wie beispielsweise eine Größe, eine Geometrie, eine Lage, eine Identifikations-Kennung, ein Aufbau, eine Konfiguration, verfügbare Services und Funktionalitäten, angeschlossene Geräte, Module und/oder Baugruppen, verfügbare Steuer- und sonstige Kommandos sowie verfügbare Kommunikations-Schnittstellen, entsprechende Kommunikations-Parameter (MAC-Adresse o.Ä.) und/oder eine Zustands-Information bezüglich des Produktions-moduls umfassen.

Die Selbstbeschreibungs-Information bezüglich Eigenschaften des zweiten Produktionsmoduls sowie auch bezüglich weiterer in der vorliegenden Beschreibung genannter Produktionsmodule kann entsprechend den vorstehenden Ausführungen ausgestaltet und eingerichtet sein.

Das Übertragen der Selbstbeschreibungs-Information zwischen den Produktionsmodulen kann beispielsweise als drahtgebundene und/oder drahtlose Kommunikation erfolgen beziehungsweise ausgestaltet und eingerichtet sein. Eine derartige Übertragung kann beispielsweise über Ethernet, Feldbusse, WLAN, Bluetooth, NFC, optisch oder Ähnliches erfolgen beziehungsweis ausgestaltet und eingerichtet sein. Bei der Kopplung des zweiten Produktionsmoduls mit dem ersten kann beispielsweise vorgesehen sein, dass die zweite Selbstbeschreibungs-Information des zweiten Produktionsmoduls an das Produktionsmodul gesendet wird. Weiterhin kann auch die Selbstbeschreibungs-Information des Produktionsmoduls an das zweite Produktionsmodul gesendet werden. Auch ein Austausch der Stellenbeschreibungs-Informationen zwischen Produktionsmodul und zweitem Produktionsmodul kann vorgesehen sein.

Die weitere Einrichtung, an welche die Selbstbeschreibungs-Information vom Produktionsmodul übertragbar ist oder übertragen wird, kann jede elektronische Einrichtung sein, welche zur Kommunikation mit dem Produktionsmodul sowie zum Empfang der Selbstbeschreibungs-Information vom Produktionsmodul ausgebildet und eingerichtet ist. Derartige Einrichtungen können beispielsweise als ein Produktionsmodul gemäß der vorliegenden Beschreibung, ein sogenanntes "Cyber-Physcial-Production-Modul" (CPPM), ein Computer, ein Server, ein Controller, eine Speicherprogrammierbare Steuerung, eine Automatisierung-Einrichtung oder ein Automatisierungs-Modul oder Ähnliches ausgebildet und eingerichtet sein.

Unter einer Datenbank wird im Rahmen der vorliegenden Beschreibung jede in vorbestimmter Weise verwaltete, strukturierte Ansammlung von Daten verstanden. Dabei kann die Vorgehensweise zur Verwaltung der Daten beispielsweise Dokument-Graph-, Objekt-, Attribut-Wert-Paar- und/oder Spaltenorientiert sein oder auch gemäß eines relationalen Datenmodells erfolgen.

Unter einer Nicht-relationalen Datenbank wird dabei eine solche verstanden, welche zur Verwaltung ein anderes als ein relationales Datenmodell verwendet.

Im Gegensatz zu gängigen relationalen Datenbanken (z.B. SQL-Datenbanken) bezeichnet "NoSQL" (Englisch für: Not only SQL) Datenbanken einen nicht-relationalen Ansatz. Unter NoSQL-Datenbanken werden im Zusammenhang mit der vorliegenden Beschreibung und den Ansprüchen solche Datenbanken verstanden, welche den oben genannten nicht-relationalen Ansatz verfolgen. Insbesondere werden unter NoSQL-Datenbanken im Rahmen der vorliegenden Beschreibung und Ansprüche Dokument-, Graph-, Objekt-, Attribut-Wert-Paar- und/oder Spalten-orientierte Datenbanken verstanden. Solche NoSQL-Datenspeicher benötigen in der Regel keine fest gelegten Tabellenschemata und versuchen, so genannten "Joins" zu vermeiden.

Aktuelle NoSQL-Datenbanken verzichten in der Regel auf starre Schemata der Tabellen, wie sie beispielsweise ihre relationalen Pendants aufweisen. Als schemafreie Datenbanken setzen sie auf flexiblere Techniken, um festzulegen, wie Daten gespeichert werden. Alternativ kann der Speichermodus auch den Anwendungen überlassen werden. Der Name NoSQL lässt sich auf den Einsatz anderer Protokolle für die Kommunikation mit den Clients als das SQL-Protokoll zurückführen.

Eine NoSQL-Datenbank im Zusammenhang mit der vorliegenden Beschreibung kann z.B. als eine Dokument-orientierte Datenbank, eine Graph-orientierte Datenbank, eine verteilte ACID-Datenbank, eine Key-Value-Datenbank, eine Attribut-Wertpaarorientierte Datenbank, eine Multivalue-Datenbank, eine Objekt-orientierte Datenbank und/oder als eine Spalten-orientierte Datenbank oder eine Kombination oder Weiterentwicklung solcher Datenbanken eingerichtet und ausgestaltet sein.

Unter einer OWL-Datenbank wird eine Datenbank verstanden, welche die so genannte "Web Ontology Language" verwendet, welche vom sogenannten "World Wide Web" Konsortium (W3C) standardisiert wurde.

Unter einer RDF-Datenbank wird eine Datenbank verstanden, welche das ebenfalls vom "World Wide Web" Konsortium (W3C) standardisierte "Ressource Description Framework" benützt.

Die Abfragesprache SPARQL ist eine Graph-basierte Abfragesprache für das "Ressource Description Framework" (RDF). Der Name ist ein Akronym für "SPARQL Protokoll and RDF Query Language". SPARQL wurde vom "World Wide Web" Konsortium (W3C) 2008 erstmals als Empfehlung freigegeben.

Weiterhin kann das Produktionsmodul zur Speicherung der Selbstbeschreibungsinformation als eine NoSQL-Datenbank, eine nicht-relationale Datenbank, eine OWL-Datenbank, eine RDF-Datenbank und/oder eine SPARQL als Absprachefrage verwendenden Datenbank ausgebildet und eingerichtet sein.

In einer vorteilhaften Ausgestaltung umfasst die Selbstbeschreibungs-Information beispielsweise:
- eine Serviceinformation bezüglich der Produktions-Funktion,
- eine Konfigurations-Information bezüglich einer Lage und/oder Ausgestaltung des Produktionsmoduls,
- eine Fähigkeits-Information bezüglich verfügbarer Funktionen und Services des Produktionsmoduls, welche eine Information über die Produktions-Funktionen umfasst,
- eine Befehls-Information bezüglich vom Produktionsmodul ausführbare Befehle und einstellbarer Parameter und/oder
- eine Zustands-Information bezüglich eines Arbeitszustands des Produktionsmoduls umfasst.

Weiterhin kann die im Produktionsmodul gemäß der vorliegenden Beschreibung gespeicherte Selbstbeschreibungs-Information eine Konfigurations-Information bezüglich einer Lage und/oder Ausgestaltung des Produktionsmoduls umfassen.

Die Selbstbeschreibungs-Information kann auch eine Fähigkeits-Information bezüglich verfügbarer Funktionen und Services des Produktionsmoduls umfassen, wobei diese beispielsweise eine Information über die Produktions-Funktion umfassen kann.

Weiterhin kann die Selbstbeschreibungs-Information auch eine Befehls-Information bezüglich vom Produktionsmodul ausführbarer oder verstehbarer Befehle sowie einstellbarer oder eingestellter Parameter umfassen.

Zudem kann die Selbstbeschreibungs-Information auch eine Zustandsinformation bezüglich eines Arbeitszustands umfassen. Dabei kann ein Arbeitszustand beispielsweise einen aktuellen Betriebszustand (voll funktional aktiv, teilweise funktional aktiv, inaktiv, Notbetrieb, o.Ä.) oder auch Informationen bezüglich aufgetretener Fehler und Warnungen oder Ähnlichem umfassen. Die Zustandsinformation kann weiterhin eine Information über ein im bzw. am Produktionsmodul vorhandenes Produkt (z.B. eine entsprechende Produkt-ID, ein aktueller Bearbeitungs-Zustand, eine aktuelle Position innerhalb der Produktionsmoduls, o.ä.) umfassen.

Die Konfigurations-Information des Produktionsmoduls kann beispielsweise eine Position, eine funktionale Ausgestaltung und/oder eine geometrische Ausgestaltung des Produktionsmoduls umfassen. Weiterhin kann die Konfigurations-Information des Produktionsmoduls auch einen verfügbaren und/oder zugänglichen räumlichen Arbeitsbereich oder ein physikalisches und sonstiges Umfeld (z.B. benachbarte Module, Maschinen, Sicherheitsbereiche, o.Ä.) umfassen.

Das mit dem Produktionsmodul koppelbare oder gekoppelte zweite Produktionsmodul kann eine zweite Selbstbeschreibungs-Information bezüglich Eigenschaften des zweiten Produktions-moduls umfassen, wobei das Produktionsmodul weiterhin zum Übertragen der Selbstbeschreibungs-Informationen, oder Teilen der Selbstbeschreibungs-Informationen, an das zweite Produktionsmodul und zum Empfang der zweiten Selbstbeschreibungs-Information, oder Teilen der zweiten Selbstbeschreibungs-Information, vom zweiten Produktionsmodul ausgebildet und eingerichtet ist.

Dabei kann die zweite Selbstbeschreibungs-Information im zweiten Produktionsmodul beispielsweise ebenfalls als NoSQL-Datenbank, nicht-relationale Datenbank, OWL-Datenbank, RDF-Datenbank und/oder eine SPARQL als Abfragesprache verwendende Datenbank gespeichert oder speicherbar sein. Alternativ kann das zweite Produktionsmodul auch zur Speicherung der zweiten Selbstbeschreibungs-Information als NoSQL-Datenbank, nicht-relationale Datenbank, OWL-Datenbank, RDF-Datenbank und/oder eine SPARQL als Abfragesprache verwendende Datenbank ausgebildet und eingerichtet sein.

Der Inhalt der Selbstbeschreibungs-Information bezüglich der Eigenschaften des zweiten Produktionsmoduls kann beispielsweise entsprechen der Selbstbeschreibungs-Information bezüglich der Eigenschaften des Produktionsmoduls ausgebildet und eingerichtet sein. Die Übertragung der Selbstbeschreibungs-Information beziehungsweise der zweiten Selbstbeschreibungs-Information zwischen ersten und zweiten Produktionsmodul kann beispielsweise als eine drahtgebunden und/oder drahtlose Kommunikation, beispielsweise über Ethernet, Feldbusse, WLAN, Bluetooth, NFC, optisch oder ähnlich erfolgen.

Die Selbstbeschreibungs-Information des Produktionsmoduls kann weiterhin eine Port-Information bezüglich der Kopplung mit dem zweiten Produktionsmodul umfassen.

Damit wird das Aufbauen und Einrichten beziehungsweise auch der Betrieb eines derartige Produktionsmodule verwendenden Produktionssystems vereinfacht, indem innerhalb eines Produktionsmoduls bereits Informationen bezüglich einer Kopplung mit einem benachbarten Produktionsmodul vorhanden sind und somit beispielsweise bereits Eigenschaften des zweiten oder auch weiterer Produktionsmodule bei der Arbeit oder auch einer entsprechenden Planung durch das Produktionsmodul relativ einfach zugänglich sind.

Die Port-Information bezüglich der Kopplung mit dem zweiten Produktionsmodul kann beispielsweise eine Information über die zweite Produktions-Funktion des zweiten Produktionsmoduls oder auch weitere Produktions-Funktionen und/oder -Services des zweiten Produktionsmoduls umfassen. Weiterhin kann die Port-Information bezüglich der Kopplung mit dem zweiten Produktionsmodul Teile oder auch die gesamte zweite Selbstbeschreibungs-Information des zweiten Produktionsmoduls umfassen oder Informationen umfassen, welche aus Teilen oder der gesamten zweiten Selbstbeschreibungs-Information des zweiten Produktionsmoduls ermittelt wurden.

Weiterhin kann die Port-Information bezüglich der Kopplung mit dem zweiten Produktionsmodul eine Information über einen räumlichen Wechselwirkungsbereich des Produktionsmoduls mit dem zweiten Produktionsmodul umfassen. Dabei kann der räumliche Wechselwirkungsbereich beispielsweise derart als ein räumlicher Bereich vorgesehen und ausgestaltet sein, dass bei einem im räumlichen Wechselwirkungsbereich befindlichen Produkt sowohl die Produktionsfunktion des Produktionsmoduls als auch die zweite Produktionsfunktion des zweiten Produktions-moduls auf ein Produkt wirken können.

So kann beispielsweise bei zwei Modulen, welche beide eine Transport-Funktionalität aufweisen, ein Wechselwirkungsbereich, beispielsweise ein solcher Bereich sein, in dem beispielsweise eine Übergabe vom einen zum anderen TransportMedium erfolgen kann oder erfolgt. Sind beide Module beispielsweise mit einer Bearbeitungs-Funktionalität versehen, so kann der Wechselwirkungsbereich beispielsweise ein solcher Bereich sein, in welchem sowohl die eine als auch die andere Bearbeitungsfunktionalität auf das Produkt einwirken kann. Weist eines der Module beispielsweise eine Bearbeitungs-Funktionalität auf, während das zweite Modul beispielsweise eine Transport-Funktionalität aufweist, dann kann ein Wechselwirkungsbereich, beispielsweise ein solcher Bereich sein, in welchem das Transport-Modul ein Produkt positionieren muss oder kann, damit dieses durch das andere Modul bearbeitbar ist oder bearbeitet wird.

Die Ermittlung und/oder Speicherung der Port-Information bezüglich der Kopplung mit dem zweiten Produktionsmodul kann beispielsweise durch einen Benützer ausgelöst werden. Weiterhin kann die Port-Information auch im Rahmen einer Kopplung mit dem zweiten Produktionsmodul selbsttätig ermittelt und/oder gespeichert werden. Weiterhin kann eine Speicherung der Port-Information bezüglich der Kopplung mit dem zweiten Produktionsmodul auch erfolgen, wenn beispielsweise eine Änderung des Zustands oder der Eigenschaften des zweiten Produktionsmoduls stattgefunden hat und das zweite Produktionsmodul dann dem Produktionsmodul die aktualisierte Zustands- oder Eigenschafts-Information mitteilt.

Das Produktionsmodul kann auch noch eine weitere Port-Information bezüglich der Kopplung mit einem weiteren Produktionsmodul umfassen, wenn eine Kopplung mit dem weiteren Produktionsmodul gemäß der vorliegenden Beschreibung vorgesehen ist oder vorliegt. Es kann beispielsweise eine Port-Information gemäß der vorliegenden Beschreibung für jedes mit dem Produktionsmodul unmittelbar gekoppelte Produktionsmodul vorgesehen oder gespeichert sein.

Die Port-Information bezüglich der Kopplung mit dem zweiten Produktionsmodul kann weiterhin Informationen bezüglich Eigenschaften von mit dem zweiten Produktionsmodul unmittelbar und/oder mittelbar verbundenen weiteren Produktionsmodulen umfassen. Insbesondere kann die Port-Information bezüglich der Kopplung mit dem zweiten Produktionsmodul Informationen bezüglich Produktions-Funktionen der mit dem zweiten Produktionsmodul unmittelbar und/oder mittelbar verbundenen Funktionsmodule umfassen.

Dies vereinfacht den Aufbau, die Einrichtung und/oder den Betrieb eines ein derartiges Produktionsmodul umfassenden Produktionssystems, da im Produktionsmodul bereits Informationen darüber vorliegen, welche Funktionalitäten oder Module über eine bestimmte Kopplung mit einem bestimmten weiteren Modul erreichbar sind. Auf diese Weise kann beispielsweise das Einrichten und auch das Betreiben eines derartigen Produktionssystems für den Benutzer vereinfacht werden, indem beispielsweise nur noch einfachere, weniger oder auch keine Arbeitsschritte durch einen Benutzer beim Einrichten notwendig sind. Auch der Aufbau eines solchen Systems kann für einen Benutzer auf diese Weise erleichtert werden.

Die Port-Information bezüglich der Kopplung mit dem zweiten Produktionsmodul kann dabei Informationen bezüglich Eigenschaften oder auch Produktions-Funktionen aller mit dem zweiten Produktionsmodul unmittelbar und/oder mittelbar verbundenen weiteren Produktionsmodule umfassen.

Dabei ist ein Produktionsmodul mit einem anderen unmittelbar verbunden, wenn zwischen beiden Modulen eine Kopplung gemäß der vorliegenden Beschreibung vorgesehen oder eingerichtet ist und/oder die Module unmittelbar benachbart sind. Unmittelbar verbunden können zwei Module sein, wenn sie beispielsweise derart ausgestaltet, gekoppelt und in einer geometrischen Lage zueinander befindlich sind, dass bei geeigneter Positionierung eines Produkts diesem Produkt Produktionsfunktionen beider Module zugänglich sind.

Mittelbar verbunden sind zwei Produktionsmodule, wenn keine unmittelbare Kopplung zwischen diesen Modulen besteht, sondern eine Kopplung über ein oder mehrere dazwischen liegende Module erfolgt.

Die zweite Selbstbeschreibungs-Information des zweiten Produktionsmoduls kann eine entsprechende Port-Information bezüglich der Kopplung mit dem Produktionsmodul umfassen, welche analog den vorstehenden Angaben und Ausgestaltungen bezüglich der Port-Information ausgestaltet und eingerichtet sein kann.

Das Produktionsmodul kann weiterhin zur Kommunikation mit einer einem zu bearbeitenden Produkt zugeordneten Produkt-Datenverarbeitungseinrichtung und/oder zum Empfang einer Produktions-Information bezüglich einer Herstellung eines Zwischen- oder Endprodukts ausgebildet und eingerichtet sein.

Dies erleichtert den Aufbau, die Einrichtung und/oder den Betrieb eines ein solches Produktionsmodul umfassenden Produktionssystems, indem im Produktionsmodul nicht nur die eigenen Eigenschaften und gegebenenfalls auch die weiterer Module verfügbar sind, sondern über eine derartige Ausgestaltung auch Informationen über eine mit dem Modul beziehungsweise dem Produktionssystem durchzuführende Produktionsschritte.

Auf diese Weise kann einem Benutzer beispielsweise eine Planung einer Produktion erleichtert werden, oder diese teil- oder vollautomatisiert werden, indem die Anforderungen, die sich aus der Produktions-Information für die Produktion des Zwischen- oder Endprodukts ergeben, mit den Funktionalitäten des Produktionsmoduls und gegebenenfalls mit diesen gekoppelten Modulen abgeglichen werden können. In diesem Zusammenhang ist die Speicherung der Selbstbeschreibungs-Informationen als nicht-relationale Datenbank oder NoSQL-Datenbank sehr vorteilhaft, da auf diese Weise auch ein Abgleich komplexerer Begrifflichkeiten und logischer Zusammenhänge einfacher durchführbar ist.

Die Produkt-Datenverarbeitungseinrichtung kann beispielsweise derart ausgestaltet und eingerichtet sein, dass sie z.B. während eines auf das Produkt bezogenen Herstellungsvorgangs fest mit dem Produkt verbunden oder assoziiert ist bzw. sein kann. Dabei kann die Produkt-Datenverarbeitungseinrichtung beispielsweise einen entsprechenden Controller, einen entsprechenden Speicher und/oder eine entsprechende Kommunikationseinrichtung zur Kommunikation mit dem Produktionsmodul umfassen.

Die Produkt-Datenverarbeitungseinrichtung kann beispielsweise auch mechanisch mit dem Produkt assoziiert sein, beispielsweise am Produkt angebracht sein, oder auch an einem Träger, Halter für das Produkt oder Ähnlichem. Die Kommunikationseinrichtung kann beispielsweise zur Kommunikation über RFID, Bluetooth oder WLAN eingerichtet sein, da sich auf diese Weise bei einem sich über verschiedene Module bewegenden Produkt die Kommunikation einfach bewerkstelligen lässt. Die Produkt-Datenverarbeitungseinrichtung kann auch aus mehreren Komponenten bestehen, bei dem beispielsweise eine mit dem Produkt in der vorstehend genannten Art und Weise assoziiert ist, während ein zweiter Teil beispielsweise auf einem externen Rechner, einem anderen Modul oder Ähnlichem installiert sein kann. Auf diese Weise könnte beispielsweise der dem Produkt direkt assoziierte Teil eine Produkt-Identifikations-Kennung umfassen und kommunizieren, während beispielsweise im externen System dann entsprechende Produktions-Informationen hinterlegt und über eine gesonderte Kommunikation ans Produktionsmodul übertragbar sind.

Der Empfang der Produktions-Information kann beispielsweise von der Produkt-Datenverarbeitungseinrichtung unmittelbar oder auch von einem anderen Rechner, Computer oder Controller erfolgen, z.B. von einem MES-System (MES: manufacturing execution system), einem ERP-System (ERP: enterprise resource planning) oder einem ähnlichen System.

Die Produktions-Information kann die zur Herstellung des Zwischen- oder Endprodukts notwendigen, erforderlichen oder vorgeschlagenen Arbeitsschritte und/oder Informationen diesbezüglich umfassen oder aus solchen bestehen. Solche Arbeitsschritte, beziehungsweise Informationen diesbezüglich, können beispielsweise durch mechanische Bearbeitung (Fräsen, Bohren, Pressen, o.ä.) herzustellende geometrische Ausgestaltungen, Bewegungen von Aktoren (z.B. Bewegung Motoren, Pumpen oder Ventilen), auszuführende Temperatur- und/oder Druckverläufe, Informationen bezüglich einer Bedruckung oder Lackierung, Informationen bezüglich der Herstellung von Verbindungen zwischen Teilen, Produkt-Teilen oder Baugruppen oder ähnliche Arbeitsschritte beziehungsweise Informationen diesbezüglich sein.

Insbesondere kann die Produktions-Information alle Arbeitsschritte und Informationen diesbezüglich enthalten, die zur Herstellung des Zwischen- oder Endprodukts aus einem vorgegebenen Ausgangsprodukt notwendig beziehungsweise geplant sind.

Die in der Produktions-Information enthaltenen Angaben, Daten und/oder Elemente bezüglich der Herstellung des Zwischen- oder Endprodukts können beispielsweise in einer Produkt bezogenen Sprache, Formulierung oder Ausgestaltung oder auch einer abstrakten, allgemeineren Formulierung oder Darstellung von Arbeitsschritten oder Informationen diesbezüglich hinterlegt oder ausgestaltet sein.

Weiterhin kann das Produktionsmodul zur Speicherung einer Modul-Planungsinformation ausgebildet und eingerichtet sein. Das Produktionsmodul kann auch zur Ausgabe einer Information bezüglich der Modul-Planungsinformation ausgebildet und eingerichtet sein.

Die Modul-Planungsinformation kann insbesondere Informationen über durch das Produktionsmodul am Produkt auszuführende Funktionalitäten umfassen oder aus solchen bestehen. Derartige Informationen können beispielsweise Angaben über ein zu bearbeitendes Produkt, beispielsweise eine Produkt-ID, ein Name, eine Kennung, ein Typ o.Ä. sein. Weiterhin können derartige Informationen an diesem Produkt durchzuführende ein oder mehrere Produktions-Funktionen oder Services umfassen. Zudem kann die Planungsinformation entsprechende Produktions- oder Servicedaten zu den Produktions-Funktionen, wie beispielsweise CAD-Daten, Einstellungen, Temperaturen, Temperaturverläufe, erforderliche Qualität, o.Ä. umfassen oder aufweisen. Weiterhin kann die Modul-Planungsinformation auch Informationen über einen Zeitpunkt, einen Zeitslot und/oder eine Zeitdauer, für die Bearbeitung eines Produkts durch das Produktionsmodul umfassen oder aufweisen.

Die Modul-Planungsinformation kann also beispielsweise diejenige Information umfassen oder aus ihr bestehen, die zu einer Bearbeitung des Produkts durch das Produktionsmodul für das Produktionsmodul notwendig, erforderlich und/oder hilfreich sind oder sein können.

Dabei kann die Modul-Planungsinformation im Produktionsmodul abgespeichert sein. Weiterhin kann das Produktionsmodul auch zum Empfang der Modul-Planungsinformation von einer weiteren Datenverarbeitungseinrichtung, beispielsweise einem Computer, Server, weiteren Produktionsmodul o.Ä. ausgebildet und eingerichtet sein.

Die Ausgabe einer Information bezüglich der Modul-Planungsinformation kann beispielsweise als Ausgabe einer Information über aktuell mit dem Modul geplante Produktionsschritte, verfügbare Zeitslots oder auch die Ausgabe der kompletten Modul-Planungsinformation an ein entsprechendes System ausgebildet und eingerichtet sein.

Die vorstehende Aufgabe wird auch gelöst durch ein Produktionssystem zur Herstellung eines Zwischen- oder Endprodukts, wobei das Produktionssystem eine Mehrzahl von gemäß der vorliegenden Beschreibung gekoppelten Produktionsmodulen umfasst, und wobei weiterhin jedes der Mehrzahl von Produktionsmodulen gemäß der vorliegenden Beschreibung ausgebildet ist oder sein kann.

Dabei kann das Produktionssystem beispielsweise eine Gesamtanlage oder ein Gesamtsystem zur Herstellung eines Zwischen- oder Endprodukts oder auch ein Teilsystem eines solchen Gesamtsystems oder einer solchen Gesamtanlage sein.

Unter einem Endprodukt wird allgemein sich als Ergebnis einer Produktionsanlage ergebendes Produkt verstanden. Dabei kann es sich beispielsweise um ein vermarktbares, lagerbares oder auch transportierbares Produkt oder Material handeln. Dies kann beispielsweise an einen Endkunden oder auch an einen Weiterverarbeiter vermarktet werden oder auch innerhalb einer Anlage weiter bearbeitet werden. Ein Endprodukt kann auch eine Mehrzahl von Stücken, eine Materialmenge oder eine Stoffmenge oder Ansammlung sein oder eine solche umfassen.

Ein Produktionssystem kann beispielsweise mindestens zwei Produktionsmodule gemäß der vorliegenden Beschreibung, vorteilhafter Weise mindestens drei bis zehn Module gemäß der vorliegenden Beschreibung umfassen.

Die vorstehend genannte Aufgabe wird auch gelöst durch ein Produktionssystem zur Herstellung eines Zwischen- oder Endprodukts, umfassend eine Mehrzahl von Produktionsmodulen, wobei jedes der Mehrzahl von Produktionsmodulen zur Kopplung mit jeweils mindestens einem weiteren Produktionsmodul der Mehrzahl von Produktionsmodulen ausgebildet und eingerichtet ist, und wobei jeweils in einer Speichereinrichtung in jedem der Produktionsmodule eine Selbstbeschreibungs-Information bezüglich Eigenschaften des betreffenden Produktionsmoduls gespeichert ist, und wobei jedes der Produktionsmodule zum Übertragen der jeweiligen Selbstbeschreibungs-Information oder Teilen der jeweiligen Selbstbeschreibungs-Information an eine weitere Einrichtung ausgebildet und eingerichtet ist.

Dabei ist weiterhin vorgesehen, dass zumindest einzelne der Mehrzahl von Produktionsmodulen gemäß der vorliegenden Beschreibung untereinander gekoppelt sind, und dass das Produktions-System ein Begriffs-Transfer-Modul umfasst, wobei das Begriffs-Transfer-Modul zur Zuordnung von Elementen einer Produktions-Information bezüglich der Herstellung des Zwischen- oder Endprodukts und Elementen der Selbstbeschreibungs-Information der Produktionsmodule eingerichtet und ausgebildet ist.

Ein derartiges Produktionssystem ermöglicht einen einfacheren Aufbau, eine einfachere Einrichtung oder einen einfacheren Betrieb, indem zum einen beispielsweise Selbstbeschreibungs-Informationen in den einzelnen Produktionsmodulen vorgesehen sind, mit welchen sich das Einrichten, Aufbauen und Betreiben eines derartigen Produktionssystems vereinfachen, teilautomatisieren oder sogar automatisieren lassen kann. Über die Verfügbarkeit solcher Informationen sind beispielsweise Fähigkeiten der verschiedenen Module mit einer entsprechenden Produktions-Information, z. B. einer "Produktions-Anleitung" für ein Produkt, abgleichbar. Weiterhin vorteilhaft ist die Verwendung des Begriffs-Transfer-Moduls in diesem Zusammenhang, welches zur Durchführung einer derartige Zuordnung ausgebildet und eingerichtet sein kann.

Dabei kann das Begriffs-Transfer-Modul wie an anderer Stelle der vorliegenden Beschreibung näher erläutert ausgestaltet und eingerichtet sein. Insbesondere kann das Begriffs-Transfer-Modul im Rahmen der Zuordnung von Elementen der Produktionsinformation und der Elemente der Selbstbeschreibungs-Informationen zum Zugriff auf eine oder mehrere NoSQL-Datenbanken oder nicht-relationale Datenbanken eingerichtet und ausgebildet sein, insbesondere eine oder mehrere derartige Datenbanken umfassen. Weiterhin kann vorgesehen sein, dass das Begriffs-Transfer-Modul zur Verwendung bzw. zum Zugriff auf eine OWL- oder RDF-Datenbank ausgebildet und eingerichtet ist. Zudem kann vorgesehen sein, dass das Begriffs-Transfer-Modul zur Verwendung von SPARQL als Abfragesprache im Rahmen der Zuordnung von Begriffen der Produktions-Information und der Selbstbeschreibungsinformation ausgebildet und eingerichtet ist.

Dabei kann das Begriffs-Transfer-Modul beispielsweise als Software-Applikation mit einer zugehörigen Hardware zum Ablauf der Applikationen ausgebildet und eingerichtet sein, wobei die Hardware auch von weiteren Software-Applikationen und -Anwendungen genützt werden oder nutzbar sein kann.

Das Begriffs-Transfer-Modul kann als eigenständige Einheit innerhalb des Produktionssystems ausgebildet und eingerichtet sein, beispielsweise als Teil einer entsprechenden Rechnereinheit. Das Begriffs-Transfer-Modul kann auch Teil eines Produktionsmoduls, mehrerer der Produktionsmodule oder aller Produktionsmodule des Produktionssystems sein.

Weiterhin können die Produktionsmodule, die Selbstbeschreibungs-Information bezüglich Eigenschaften eines Produktions-moduls, die Übertragung der Selbstbeschreibungs-Information, die weitere Einrichtung, die Produktionsmodule und auch das Produktionssystem weiterhin gemäß der vorliegenden Beschreibung weiter ausgestaltet und eingerichtet sein.

Die vorstehende Aufgabe wird auch gelöst von einer Produktions-Planungs-Einrichtung zur Planung einer Herstellung eines Zwischen- oder Endprodukts mit einem Produktionssystem gemäß der vorliegenden Beschreibung, wobei die Produktions-Planungs-Einrichtung zur Speicherung einer Produktions-Information eingerichtet und ausgebildet ist und wobei die Produktions-Information zur Herstellung des Zwischen- oder Endprodukts erforderliche Produktionsschritte umfasst. Dabei ist die Produktions-Planungs-Einrichtung zum Empfang und zur Speicherung von zumindest Teilen der Selbstbeschreibungs-Information einer Auswahl von Produktionsmodulen des Produktionssystems ausgebildet und eingerichtet. Zudem ist die Produktions-Planungs-Einrichtung zum Ermitteln eines Produktions-Ablaufplans für ein zu bearbeitendes Produkt eingerichtet und ausgebildet, wobei der Produktions-Ablaufplan eine Information über eine Reihenfolge von Produktionsmodulen des Produktionssystems umfasst, welche eine Produkt zur Herstellung des Zwischen- oder Endprodukts durchlaufen soll oder kann beziehungsweise durchläuft.

Mittels einer derartigen Produktions-Planungs-Einrichtung lässt sich das Aufbauen und Einrichten beziehungsweise auch Betreiben eines entsprechenden Produktionssystems weiter vereinfachen, indem es beispielsweise über den Zugriff auf Selbstbeschreibungs-Informationen von Produktionsmodulen es möglich ist, aus einem für ein Produkt erstellten Produktionsplan mit reduzierter oder auch ohne Benutzereinwirkung einen Ablaufplan für die Herstellung des Produkts mit dem Produktionssystem zu erstellen.

Insbesondere der Abgleich von Begriffen aus der Selbstbeschreibungs-Information, das heißt beispielsweise den Fähigkeiten der Produktionsmodule, mit den Anforderungen an die Produktherstellung aus der Produktions-Information, lässt sich beispielsweise vorteilhaft mit als NoSQL-Datenbank oder auch als nicht-relationale Datenbank abgespeicherten Selbstbeschreibungs-Informationen der Produktionsmodule erreichen.

Durch auf derartige Weise gespeicherte Selbstbeschreibung-Informationen lassen sich komplexere logische Verknüpfungen, wie sie sich beispielsweise aus den unterschiedlichen Begriffswelten der Produktions-Information und Selbstbeschreibungs-Information sich ergeben, handhaben. So lassen sich mit Hilfe der genannten Datenbanken beispielsweise so genannte "Ontologien" datenverarbeitungstechnisch implementieren. Mit solchen Ontologien lassen sich z.B. die Begriffswelten der Produktions-Information für die Produkt-Herstellung und der Selbstbeschreibungs-Informationen der Produktionsmodule logisch miteinander verknüpft.

Eine Produktions-Planungs-Einrichtung kann beispielsweise als eine Software-Applikation mit einer entsprechenden Ablauf-Hardware ausgebildet und eingerichtet sein. Dabei kann vorgesehen sein, dass die Ablauf-Hardware z.B. auch von weiteren Software-Applikationen, Betriebssystemen oder ähnlichen Software-Elementen benützt wird. Die Produktions-Planungs-Einrichtung kann beispielsweise innerhalb einer mit dem Produkt assoziierten entsprechenden Elektronik implementiert sein. Sie kann beispielsweise auch innerhalb eines externen Rechners realisiert sein oder auch innerhalb eines Produktionsmoduls des Produktionssystems, innerhalb mehrerer Produktionsmodule des Produktionssystems oder auch innerhalb aller Produktionsmodule des Produktionssystems realisiert sein.

Dabei kann vorgesehen sein, dass die Produktions-Information in der Produktions-Planungs-Einrichtung gespeichert ist. Weiterhin kann die Produktions-Planungs-Einrichtung zum Empfang der Produktions-Information von einer weiteren Einheit ausgebildet und eingerichtet sein. Solche externe Einheiten können beispielsweise als eine mit dem Produkt assoziierten Speicher- oder Datenverarbeitungseinheit, als ein weiteres Produktionsmodul oder auch beispielsweise als ein externer Rechner, wie beispielsweise ein Planungs-System (z.B. ein MES-System oder ein ERP-System), ausgebildet und eingerichtet sein.

Die Produktions-Information mit den darin enthaltenen, zur Herstellung des Zwischen- oder Endprodukts erforderlichen Produktionsschritten, kann wie in der vorliegenden Beschreibung an anderer Stelle näher beschrieben ausgebildet und eingerichtet sein. Dabei muss die Produktions-Information nicht sämtliche Produktionsschritte umfassen, welche zur Herstellung des Zwischen- oder Endprodukts notwendig sind. So können beispielsweise auch Produktionsschritte im Rahmen der Herstellung des Zwischen- oder Endprodukts außerhalb des Produktionssystems erfolgen.

Produktionsschritte können beispielsweise, wie bereits an anderen Stellen der vorliegenden Beschreibung erläutert, jegliche Art von Bearbeitungs-, Behandlungs- und/oder TransportVorgänge sein.

Die Produktions-Planung-Einrichtung ist zum Empfang und zur Speicherung von zumindest Teilen der Selbstbeschreibungs-Information zumindest einer Auswahl von Produktionsmodulen des Produktionssystems ausgebildet und eingerichtet. Dabei kann es sich bei den Teilen der Selbstbeschreibungs-Information beispielsweise um die gesamte im jeweiligen Produktionsmodul gespeicherte Selbstbeschreibungs-Information handeln. Weiterhin kann es sich insbesondere um Teile der Selbstbeschreibungs-Informationen der jeweiligen Produktionsmodule handeln, z.B. solche Teile, welche insbesondere eine, mehrere oder alle Produktions-Funktionen und/oder -Services des jeweiligen Produktionsmoduls betreffen.

Die Auswahl von Produktionsmodulen kann beispielsweise die Gesamtheit der Produktionsmodule des Produktionssystems, eine Untermenge der Produktionsmodule des Produktionssystems oder auch nur ein Produktionsmodul des Produktionssystems sein. So kann beispielsweise vorgesehen sein, dass, wenn die Produktions-Planungs-Einrichtung in einem Produktionsmodul implementiert ist, zumindest die Teile der Selbstbeschreibungs-Informationen der anderen Produktionsmodule des Produktionssystems, welche deren jeweiligen Produktions-Funktionen betreffen, zum Produktionsmodul übertragen und dort gespeichert werden. Durch die im Produktionsmodul selbst gespeicherte eigene Selbstbeschreibungs-Information liegen der Produktions-Planungs-Einrichtung in diesem Fall dann z.B. sämtliche, die Produktions-Funktionen des Produktionssystems betreffenden Selbstbeschreibungs-Informationen vor. Mittels diesen Informationen und denjenigen aus der Produktions-Information, lässt sich dann auf vorteilhafte Weise ein Produktions-Ablaufplan gemäß der vorliegenden Beschreibung ermitteln.

Nach der Ermittlung des Produktions-Ablaufplans kann dieser beispielsweise in der Produktions-Planungs-Einrichtung gespeichert werden. Weiterhin kann der Produktions-Ablaufplan auch an eines, mehrere oder alle Produktionsmodule des Produktionssystems übertragen werden. Weiterhin kann der Produktions-Ablaufplan auch beispielseise an eine einem Produkt assoziierte Datenverarbeitungseinrichtung übertragen und ggf. dort gespeichert werden.

Die Ermittlung des Produktions-Ablaufplans kann beispielsweise dadurch erfolgen, dass jeder in der Produktions-Information enthaltene Produktionsschritt, beispielsweise vermittels einer entsprechenden Datenbank-Struktur, oder auch einer entsprechenden Ontologie-Datenbank, mit ein oder mehreren Produktions-Funktionen des Produktionssystems assoziiert wird. So kann beispielsweise als durchzuführender Produktionsschritt das Herstellen einer gewissen äußeren geometrischen Form eines Werkstücks inklusive z.B. entsprechender CAD-Daten vorgegeben sein, während im Produktionssystem beispielsweise eine Fräse zur Verfügung steht. Dann kann beispielsweise der Produktionsschritt der Herstellung dieser 3D-Form mit der Produktions-Funktion des Fräsens assoziiert werden. Weiterhin kann dann durch die Produktions-Planungs-Einrichtung im Zuge der Ermittlung des Produktions-Ablaufplans geprüft werden, ob beispielsweise die geometrischen Voraussetzungen z.B. die Größe des zu bearbeitenden Produkts mit den entsprechenden Fähigkeiten und Randbedingungen der einen oder mehreren im Produktionssystem vorhandenen Fräsen kompatibel sind. Auch einzuhaltende Qualitätskriterien oder zu bearbeitende Materialien, können hier weitere Restriktionen bei der Auswahl eines möglichen Produktions-Moduls zur Durchführung des Bearbeitungsschritts darstellen. Auf vergleichbare Weise kann dann die Produktions-Planungs-Einrichtung beispielsweise zu jedem der Produktionsschritte ein oder mehrere entsprechende Produktionsmodule ermitteln. Mit diesen Informationen kann die Produktions-Planungs-Einrichtung dann einen entsprechenden "Produktionsmodul-Wegeplan" entwerfen, entlang welchem das entsprechende Produkt z.B. durch entsprechende Transportmodule o.Ä. einen Weg durch das Produktionssystem bis zur Erstellung des Zwischen- oder Endprodukts geht.

Der Produktions-Ablaufplan kann beispielsweise eine Sammlung von Produktions-Modulen umfassen, welche die zur Herstellung des Zwischen- oder Endprodukts notwendigen Produktionsfunktionen aufweisen. Der Produktions-Ablaufplan kann auch das einem bestimmten Produkt-Ort nächstfolgende Produktionsmodul umfassen oder nur dieses nächstfolgende Produktionsmodul aufweisen. Weiterhin kann der Produktions-Ablaufplan eine Reihenfolge von Produktionsmodulen umfassen, welche ein Produkt nacheinander zur Herstellung des Zwischen- oder Endprodukts durchlaufen kann. Weiterhin können im Produktions-Ablaufplan auch alternative Reihenfolgen zur Herstellung des Zwischen- oder Endprodukts vorgesehen sein. Dabei können jeweils zu einem Produktionsmodul die dort jeweils auszuführenden ein oder mehreren Produktions-Funktionen oder -Services, entsprechende Produktions-Zeitpunkte oder -Zeiträume, eine Zeitplanung, entsprechende Produktionsparameter (z.B. CAD-Daten, Temperatur-Angaben oder -Verläufe, Druck-Muster, Press-Formen, usw.) und Ähnliches assoziiert sein. Dabei kann eine Reihenfolge von Produktionsmodulen auch ein oder mehrere Produktionsmodule mehrfach umfassen, wenn beispielsweise ein Produkt im Rahmen der Herstellung des Zwischen- oder Endprodukts mehrfach dasselbe Produktionsmodul beansprucht.

Der Produktions-Ablaufplan kann beispielsweise alle Produktionsmodule umfassen, die zur Herstellung des Zwischen- oder Endprodukts verwendet werden sollen, können oder müssen. Dabei können ein oder mehrere Produktionsmodule auch mehrfach verwendet werden. Weiterhin kann der Produktions-Ablaufplan eine Reihenfolge und gegebenenfalls ein oder mehrere Alternativ-Reihenfolgen von Produktionsmodulen umfassen, welche zur Herstellung des Zwischen- oder Endprodukts durchlaufen werden sollen, können, müssen oder welche durchlaufen werden.

Dabei kann vorgesehen sein, dass das Produktions-Planungs-System weiterhin Zugriff auf ein Begriffstransfer-Modul hat, wobei das Begriffstransfer-Modul zur Zuordnung von Elementen der Produktions-Information bezüglich der Herstellung des Zwischen- oder Endprodukts und Elementen der Selbstbeschreibungs-Information der Produktionsmodule eingerichtet und ausgebildet ist.

Ein solches Begriffstransfer-Modul innerhalb eines Produktions-Planungs-Systems vereinfacht den Aufbau, die Einrichtung und/oder den Betrieb eines entsprechenden Produktionssystems weiterhin, da der Abgleich von auszuführenden Produktionsschritten mit zur Verfügung stehenden Produktions-Funktionen über ein derartiges Begriffstransfer-Modul einfacher möglich ist, insbesondere zumindest teilautomatisierbar oder auch automatisierbar ist.

Das Begriffstransfer-Modul kann dabei beispielsweise ein Teil oder Untersegment des Produktions-Planungs-Systems oder auch als gesonderte Einheit ausgebildet und eingerichtet sein.

Dabei kann die Zuordnung von Elementen der Produktions-Information bezüglich der Herstellung des Zwischen- oder Endprodukts und Elementen der Selbstbeschreibungs-Information beispielsweise derart ausgestaltet und eingerichtet sein, dass einem, mehreren oder allen Produktionsschritten innerhalb der Produktions-Information jeweils ein oder mehrere in Produktionsmodulen des Produktionssystems verfügbare Produktions-Funktionen oder -Services zugeordnet werden. Die Zuordnung kann beispielsweise umfassen, dass einem Produktionsschritt der Produktions-Information ein oder mehrere Produktions-Funktionen zugeordnet werden, welche zur Durchführung dieses Produktionsschritts erforderlich, möglich oder notwendig sind.

Unter Verwendung eines derartigen Begriffstransfer-Moduls kann die Produktions-Planungs-Einrichtung beispielsweise einen ersten Produktionsschritt der Produktions-Information analysieren, die für diesen Schritt notwendigen ein oder mehreren Produktions-Informationen ermitteln, und die Analyse dann mit dem nächsten Produktionsschritt fortsetzen - usw.. Wenn dies dann für alle Produktionsschritte der Produktions-Information erfolgt ist, dann kann vermittels des Produktions-Planungs-Systems, beispielsweise durch entsprechende Aneinanderreihung der notwendigen Funktionalitäten und möglicher Transportwege zwischen Produktionsmodulen, ein Produktions-Ablaufplan gemäß der vorliegenden Beschreibung erstellt werden.

Weiterhin kann vorgesehen sein, dass das Begriffstransfer-Modul eine Datenbank umfasst, welche Elemente der Produktions-Information bezüglich der Herstellung des Zwischen- oder Endprodukts und Elemente der Selbstbeschreibungs-Information der Produktionsmodule umfasst, wobei diesen Elementen jeweils Elemente der jeweils anderen Kategorie, Assoziierungs-Informationen und/oder andere der Elemente zugeordnet sind.

Eine solche Datenbank, die beispielsweise als NoSQL-Datenbank oder nicht-relationale Datenbank gemäß der vorliegenden Beschreibung ausgebildet und eingerichtet sein kann, ermöglicht beispielsweise die Erstellung einer Art "Wörterbuch", welche zur "Übersetzung" der Begriffe der Produktions-Information diesen beispielsweise beispielsweise allgemeine Überbegriffe oder Kategorien zuordnet. Weiterhin können diesen Informationen auch entsprechende Begriffe bezüglich Funktionalitäten von Produktionsmodulen oder vergleichbare Herstellungsbegriffe zugeordnet sein. In gleicher Weise können beispielsweise Begriffe der Selbstbeschreibungs-Informationen allgemeine Überbegriffe, Kategorien oder Klassifizierungen zugeordnet werden oder auch einzelne Begriffe, die Produktionsschritten entsprechen. Weiterhin können auch Begriffen der Selbstbeschreibungs-Informationen auch unmittelbar oder mittelbar Begriffe aus dem Bereich der Produktions-Informationen zugeordnet sein, und/oder umgekehrt.

Auf diese Weise kann beispielsweise, ausgehend von einem bestimmten Produktionsschritt-Begriff, untersucht werden, zu welcher Kategorie der Produktionsschritt oder zu welchen Überbegriffen dieser Produktionsschritt gehört. Dann kann z.B. weiter nach Produktions-Funktionen gesucht werden, die ebenfalls diesen oder ähnlichen Kategorien oder Überbegriffen zugeordnet sind. Dies kann ggf. auch eine längere Verknüpfungs-Kette von Begriffen und Zuordnungen über verschiedene Zwischen-Kategorien oder -Begriffe erfordern.

Alternativ können beispielsweise auch gewissen Produktionsschritten unmittelbar oder mittelbar ein oder mehrere Produktionsfunktionen zugeordnet sein. Auch hierbei können ggf. auch längere oder komplexere logische Abfolgen von Begriffen notwendig sein, um zu einer sinnvollen Zuordnung eines Produktionsschritts zu Produktions-Funktionalitäten des Produktionssystems zu gelangen. In dieser Hinsicht ist die Ausgestaltung der Datenbank bzw. Datenbanken als NoSQL-Datenbank oder nicht-relationale Datenbank aufgrund der Möglichkeit der vergleichsweise einfacheren Herstellung logischer Verknüpfungs-Ketten besonders geeignet.

Assoziierungs-Informationen können dabei beispielsweise verwandte Begriffe, übergeordnete Begriffe, Klassifizierungen und/oder Kategorien sein, welche den jeweiligen Elementen zugeordnet sein können. Beispielsweise kann die Datenbank als eine so genannte "Ontologie" ausgestaltet sein, oder auch eine Darstellung einer derartigen "Ontologie" sein.

Die vorstehend genannte Aufgabe wird auch gelöst von einer Produktions-Steuerungs-Einrichtung zum Einrichten und/oder Steuern einer Herstellung eines Zwischen- oder Endprodukts mit einem Produktionssystem gemäß der vorliegenden Beschreibung, wobei die Produktions-Steuerungs-Einrichtung zur Speicherung eines Produktions-Ablaufplans für ein zu bearbeitendes Produkt ausgebildet und eingerichtet ist, wobei der Produktions-Ablaufplan eine Information über eine Reihenfolge von Produktionsmodulen des Produktionssystems umfasst, welche ein Produkt zur Herstellung des Zwischen- oder Endprodukts durchlaufen soll, kann, muss oder durchläuft. Dabei ist die Produktions-Steuerungs-Einrichtung zur Kommunikation mit zumindest einer Auswahl von Produktionsmodulen der Reihenfolge von Produktionsmodulen ausgebildet und eingerichtet. Weiterhin ist die Produktions-Steuerungs-Einrichtung zur Ermittlung eines zeitlichen Ablaufs, mit welchem die Bearbeitung der Produkte durch die Produktionsmodule beziehungsweise die Auswahl von Produktionsmodulen erfolgt, ausgebildet und eingerichtet.

Durch den speicherbaren oder gespeicherten Produktions-Ablaufplan und die Kommunikationsmöglichkeiten in den einzelnen Produktionsmodulen kann die Produktions-Steuerungs-Einrichtung durch die Ermittlung des zeitlichen Ablaufs, mit welchem die Produkte durch die Produktionsmodule bearbeitet werden, den Aufbau, die Einrichtung und/oder der Betrieb eines entsprechenden Produktionssystems weiter vereinfachen. So ist beispielsweise eine entsprechende Ablaufplanung für einen zeitlichen Ablauf einer Produktbearbeitung mit reduziertem Aufwand durch einen Benutzer, halbautomatisch oder auch vollautomatisch durchführbar.

Dabei kann die Produktions-Steuerungs-Einrichtung beispielsweise als eine Software-Applikation mit entsprechender Hardware zum Ablauf der Softwareapplikation ausgebildet und eingerichtet sein. Dabei kann beispielsweise die genannte Hardware auch von weiteren Software-Applikationen, Modulen, Betriebssystemen oder Ähnlichem genutzt werden oder nutzbar sein. Beispielsweise kann die Produktions-Steuerungs-Einrichtung Teil einer einem Produkt assoziierten Datenverarbeitungseinrichtung gemäß der vorliegenden Beschreibung ausgestaltet und eingerichtet sein. Weiterhin kann die Produktions-Steuerungs-Einrichtung Teil eines beispielsweise externen Rechners, eines Produktionsmoduls oder auch eines, mehreren oder auch allen Produktionsmodulen des Produktionssystems sein bzw. von derartigen Einrichtungen umfasst sein.

Weiterhin kann vorgesehen sein, dass die Produktions-Steuerungs-Einrichtung zur Speicherung des Produktions-Ablaufplans für das zu bearbeitende Produkt ausgebildet und eingerichtet ist, oder dass der Produktions-Ablaufplan für das zu bearbeitende Produkt in der Produktions-Steuerungs-Einrichtung gespeichert ist.

Die Produktions-Steuerungs-Einrichtung kann auch zum Empfang des Produktions-Ablaufplans von einer externen Einrichtung ausgebildet und eingerichtet sein, insbesondere über entsprechende Kommunikations-Mittel verfügen, mit deren Hilfe ein derartiger Empfang erfolgen kann oder erfolgt. Derartige externe Datenverarbeitungseinrichtungen können beispielsweise eine einem Produkt assoziierte oder auch unmittelbar am Produkt befindliche Datenverarbeitungseinrichtung, ein externer Rechner, ein oder mehrere Produktionsmodule oder so genannte Cyber-Physical-Production-Modules und/oder auch ein externes Planungssystem (z.B. ein MES-System oder ein IRP-System) sein. Weiterhin kann die Produktions-Steuerungs-Einrichtung auch zur Durchführung einer entsprechenden Kommunikation mit den genannten Komponenten ausgebildet und eingerichtet sein.

Der Produktions-Ablaufplan kann beispielsweise eine geordnete Reihenfolge von Produktionsmodulen und z.B. auch weitere alternative Reihenfolgen von Produktionsmodulen umfassen. Dabei kann beispielsweise auch vorgesehen sein, dass innerhalb der Reihenfolge von Produktionsmodulen ein Produktionsmodul mehrfach genannt ist, beispielsweise wenn dieses Produktionsmodul für verschiedene Produktionsschritte verwendet wird.

Dabei muss die Reihenfolge von Produktionsmodulen keine ununterbrochene Reihenfolge sein. Das bedeutet z.B., dass die Reihenfolge von Produktionsmodulen zwar eine Abfolge von Produktionsmodulen vorgeben kann, aber durchaus zwischen den einzelnen Produktionsmodul-Schritten später noch weitere Schritte vorgesehen sein können. So kann beispielsweise im Produktions-Ablaufplan zwar eine Reihenfolge von Produktions-modulen angegeben sein, allerdings ohne entsprechende Transportschritte oder eine entsprechende Logistik vorzusehen. Weiterhin kann der Produktions-Ablaufplan auch derart ausgestaltet sein, dass die Reihenfolge von Produktionsmodulen eine aufeinander folgende Kette von aneinander grenzenden Produktionsmodulen umfasst.

Die Kommunikationsfähigkeit der Produktions-Steuerungs-Einrichtung mit den Produktionsmodulen kann beispielsweise derart ausgebildet und eingerichtet sein, dass über diese Kommunikation beispielsweise die Selbstbeschreibungs-Informationen der Produktionsmodule, beziehungsweise Teile davon, und/oder Planungsinformationen über für die Produktionsmodule geplante Arbeitsvorgänge der Produktions-Steuerungs-Einrichtung zugänglich sind.

Auf diese Weise kann beispielsweise von der Produktions-Steuerungs-Einrichtung ermittelt werden, in welchem aktuellen Zustand (z.B. voll-aktiv, eingeschränkte Aktivität, Stopp, Wartungs-Zustand, o.Ä.) das Produktionsmodul aktuell oder zukünftig (z.B. über eine entsprechende Zeitplanung) befindlich ist. Auf diese Weise von der Produktions-Steuerungs-Einrichtung z.B. ermittelt werden, wann das Produktionsmodul in Zukunft bereits beschäftigt sein wird, und welche Zeiträume beispielsweise für ein zu bearbeitendes Produkt aktuell noch zur Verfügung stehen würden.

Bei der Ermittlung des zeitlichen Ablaufs, mit welchem die Bearbeitung der Produkte erfolgt, kann die Produktions-Steuerungs-Einrichtung dann beispielsweise mit den einzelnen Produktionsmodulen entsprechende Zeitfenster "verhandeln", innerhalb welchen die jeweiligen Produktionsmodule für die Durchführung bestimmter Produktions-Funktionen an einem entsprechend zu bearbeitenden Produkt zur Verfügung stehen werden, würden oder könnten.

Unter Verwendung des Produktions-Ablaufplans, der entsprechenden Zustände und Verfügbarkeiten der Produktionsmodule sowie der vorstehend genannten Verhandlung über Möglichkeiten der Durchführung von Produktionsfunktionen durch die Produktionsmodule, kann dann beispielsweise im Rahmen der Ermittlung des zeitlichen Verlaufs, mit welchem die Bearbeitung der Produkte durch die Produktionsmodule erfolgt, ein entsprechender Zeitplan erstellt werden. Dieser umfasst dann z.B. Informationen darüber, wann die einzelnen Produktionsschritte, die sich aus dem Produktions-Ablaufplan ergeben, durch welches Produktionsmodul erfolgen können bzw. erfolgen. Auf diese Weise kann dann eine entsprechende zeitliche Ablaufplanung, gegebenenfalls mit entsprechenden Alternativplanungen, erfolgen.

Der ermittelte zeitliche Ablauf kann dann beispielsweise an die einzelnen Produktionsmodule übertragen werden, wobei weiterhin vorgesehen sein kann, dass die entsprechenden Produktionsmodule ihre jeweiligen internen Planungs-Informationen gemäß eines für ein neues Produkt übertragenen zeitlichen Ablaufplans aktualisieren. Weiterhin kann auch vorgesehen sein, dass die Produktions-Steuerungs-Einrichtung den jeweiligen Produktionsmodulen nur die das jeweilige Produktionsmodul betreffende Information aus der zeitlichen Ablaufplanung übermittelt. Auch hier kann vorgesehen sein, dass die Produktionsmodule ihre interne Zeitplanung gemäß den neu übertragenen Informationen aktualisieren.

Im Rahmen der Ermittlung eines zeitlichen Ablaufs kann beispielsweise in Bezug auf das Verhandeln der Durchführung bestimmten Produktions-Funktionen an einem bestimmten Produkt, vorgesehen sein, dass im Rahmen der Ermittlung des zeitlichen Ablaufs der Bearbeitung durch die Produktionsmodule ein entsprechender Bearbeitungs-Zeitvorschlag von der Produktions-Steuerungs-Einrichtung an das betreffende Produktionsmodul gesendet wird, und mittels einer Bestätigungsnachricht durch das Produktionsmodul der Produktions-Steuerungs-Einrichtung eine entsprechende Fixierung beziehungsweise ein "Einverständnis" des Produktionsmoduls mit dem getätigten Vorschlag erfolgt. Ein derartiger Verhandlungs-Zustimmungs-Mechanismus vereinfacht eine Ermittlung des zeitlichen Ablaufs der Bearbeitung von Produkten durch die Produktionsmodule, da mittels einer entsprechenden Fixierung der zeitliche Ablauf sicherer und zuverlässiger geplant werden kann beziehungsweise planbar ist.

Die vorstehend genannte Aufgabe wird weiterhin gelöst durch ein Produktionsmodul, welches eine Produktions-Planungs-Einrichtung gemäß der vorliegenden Beschreibung und/oder eine Produktions-Steuerungs-Einrichtung gemäß der vorliegenden Beschreibung umfasst.

Weiterhin kann vorgesehen sein, dass ein Produktionssystem gemäß der vorliegenden Beschreibung mindestens eine Produktions-Planungs-Einrichtung gemäß der vorliegenden Beschreibung und/oder mindestens eine Produktions-Steuerungs-Einrichtung gemäß der vorliegenden Beschreibung umfasst.

Auf diese Weise lässt sich der Aufbau eines entsprechenden Produktionssystems mit derartigen Produktionsmodulen weiter vereinfachen, indem bereits Mittel vorgesehen sein können, welche eine entsprechende Produktionsplanung, sowohl was eine Abfolge von durch einzelne Produktionsmodule durchgeführten Produktionsschritten als auch eine entsprechende Zeitplanung angeht, bereits im Produktionssystem, beziehungsweise -Modul, vorgesehen sein können und so teilautomatisiert oder auch vollständig automatisiert werden können.

Ein derartiges Produktionsmodul oder Produktionssystem kann beispielsweise, nach Herstellung einer entsprechenden Kommunikation verschiedener Produktionsmodule untereinander und einer entsprechenden Übermittlung einer Produktionsinformation betreffend ein bestimmtes Produkt, eine vergleichsweise selbständige Ermittlung einer Produktbearbeitung ermöglichen - von der Planung einer Bearbeitung des Produkts durch die gekoppelten Produktionsmodule bis zur praktischen Durchführung der Produktion.

Die vorstehend genannte Aufgabe wird weiterhin gelöst durch ein Verfahren zur Planung einer Herstellung eines Zwischen- oder Endprodukts mit einem Produktionssystem gemäß der vorliegenden Beschreibung, wobei
- eine Produktionsinformation vorliegt, welcher zur Herstellung des Zwischen- oder Endprodukts erforderliche Produktionsschritte umfasst,
- eine Produktions-Planungs-Einrichtung zur Planung der Herstellung des Zwischen- oder Endprodukts vorgesehen ist, und
- die Produktions-Planungs-Einrichtung Zugriff auf die Selbstbeschreibungs-Information der Produktionsmodule des Produktionssystems hat.

Dabei umfasst das genannte Verfahren die folgenden Schritte:
- Übertragen der Produktions-Information bezüglich der Herstellung des Zwischen- oder Endprodukts zur Produktions-Planungs-Einrichtung,
- Übertagen von zumindest Teilen der Selbstbeschreibungs-Information von zumindest einer Auswahl von Produktionsmodulen des Produktionssystems zur Produktions-Planungs-Einrichtung,
- Ermitteln und Speichern eines Produktions-Ablaufplans für ein zu bearbeitendes Produkt, wobei der Produktions-Ablaufplan eine Information über eine Reihenfolge von Produktionsmodulen des Produktionssystem umfasst, welche in Produkt zur Herstellung des Zwischen- oder Endprodukts durchlaufen soll, kann, muss oder durchläuft.

Durch die Fähigkeit, dass bei der Ermittlung des Produktions-Ablaufplans die übertragenen Produktions-Informationen sowie die einzelnen Selbstbeschreibungs-Informationen von zumindest einzelnen Produktionsmodulen zur Verfügung sehen, lässt sich, wie vorstehend bereits ausgeführt, eine entsprechende Produktionsplanung mit einem solchen Produktionssystem vereinfachen, teilautomatisieren oder auch vollständig automatisieren. Auf diese Weise ist der Aufbau, die Einrichtung und/oder eine Steuerung eines entsprechenden Produktionssystems vereinfachen.

Dabei ist vorgesehen, dass die Herstellung des Zwischen- oder Endprodukts mit einem Produktionssystem gemäß der vorliegenden Beschreibung erfolgt. Das Verfahren zur Planung der Herstellung kann beispielsweise ebenfalls innerhalb des Produktionssystems, beispielsweise durch ein darin vorgesehenes Rechnermodul oder auch ein oder mehrere der enthaltenen Produktionsmodule durchgeführt werden. Weiterhin kann das Verfahren auch innerhalb einer externen Rechnereinrichtung durchgeführt werden.

Die Produktions-Information kann beispielsweise in einer externen Rechnereinheit, einem entsprechenden Produkt-Planungssystem (z.B. einem MES-System oder einem ERP-System), einer einem Produkt assoziierten Datenverarbeitungseinheit und/oder auch in einem oder mehreren der Produktionsmodule vorliegen oder gespeichert sein. Die Übertragung der Produktions-Information zur Produktions-Planungs-Einrichtung kann beispielsweise auch innerhalb einer Vorrichtung erfolgen, wenn sowohl die Produktions-Information, als auch die Produktions-Planungs-Einrichtung innerhalb der gleichen Vorrichtung vorliegen bzw. vorgesehen sind.

Die Produktions-Information kann wie beispielsweise auch an anderer Stelle der vorliegenden Beschreibung näher erläutert, ausgebildet und eingerichtet sein. Sie kann insbesondere alle zur Herstellung des Zwischen- oder Endprodukts erforderlichen Produktionsschritte umfassen oder aufweisen oder auch nur eine Auswahl dieser Produktionsschritte umfassen. Im letzten Fall kann beispielsweise vorgesehen sein, dass einzelne der insgesamt erforderlichen Produktionsschritte zur Herstellung des Zwischen- oder Endprodukts auch außerhalb des Produktionssystems oder auf sonstige Weise durchgeführt werden.

Die Produktionsschritte können wie beispielsweise auch an anderer Stelle der vorliegenden Beschreibung näher erläutert, ausgebildet und eingerichtet sein. Sie können insbesondere jegliche Art von Bearbeitung, Behandlung, Umwandlung, Umformung o.Ä. eines Produkts, Materials, Stoffes, einer Baugruppe o.Ä. sein. Beispiele für Produktionsschritte können beispielsweise Fräsen, Bohren, Lackieren, Pressen, Erhitzen, Abkühlen, Transportieren, Schmelzen, Bedrucken, Lackieren, usw. sein.

Die Produktions-Planungs-Einrichtung kann beispielsweise gemäß der vorliegenden Beschreibung ausgebildet und eingerichtet sein. Sie kann insbesondere beispielsweise als eine Software-Applikation mit zugehöriger Hardware zum Ablauf der Applikation ausgebildet und eingerichtet sein. Dabei kann die genannte Hardware beispielsweise auch von weiteren Software-Applikationen genutzt werden. Die Produktions-Planungs-Einrichtung kann beispielsweise innerhalb eines Rechners, eines Controllers, eines Produktionsmoduls oder Ähnlichem, implementiert sein.

Die Produktions-Planungs-Einrichtung kann beispielsweise über entsprechende Kommunikationsmittel auf die innerhalb eines Produktionsmoduls gespeicherte Selbstbeschreibungs-Information zugreifen und diese beispielsweise vollständig oder in Teilen von Produktionsmodul anfordern und dann übertragen bekommen. Weiterhin kann die Selbstbeschreibungs-Information der einzelnen Produktionsmodule auch in einer gesonderten Einrichtung, z.B. einem entsprechenden Produktions-Planungs-System oder sonstigen Rechnern oder Modulen, gespeichert sein und von dort über entsprechende Kommunikationsmittel an die Produktions-Planungs-Einrichtung übertragen werden.

Die an die Produktions-Planungs-Einrichtung übertragenen Selbstbeschreibungs-Information können jeweils insbesondere diejenigen Teile der Selbstbeschreibungs-Information umfassen, welche sich auf eine oder mehrere Produktions-Funktionen des jeweiligen Produktionsmoduls beziehen. Dies können beispielsweise entsprechende Identifikations-Informationen für bestimmte Produktions-Funktionen, Informationen über Arbeitsbereiche und Qualitäts-Kriterien des Produktionsmoduls oder Ähnliches umfassen.

Die Auswahl von Produktionsmodulen des Produktionssystems, welche zumindest Teile ihrer Selbstbeschreibungs-Information an die Produktions-PLanungs-Einrichtung übertragen, können beispielsweise alle Produktionsmodule des Produktionssystems, einige Produktionsmodule des Systems oder auch nur ein Produktionsmodul des Produktionssystems sein. Insbesondere kann die Auswahl von Produktionsmodulen diejenigen Produktionsmodule umfassen beziehungsweise aus denjenigen Produktionsmodulen bestehen, welche mit entsprechenden Kommunikationsmitteln sowie entsprechenden Selbstbeschreibungs-Informationen versehen sind beziehungsweise Zugriff auf diese haben.

Die Speicherung des Produktions-Ablaufplans kann beispielsweise innerhalb der Produktions-Planungs-Einrichtung, innerhalb eines oder mehrerer Produktionsmodule oder auch einem gesonderten Rechner erfolgen. Eine Speicherung durch die Produktions-Planungs-Einrichtung wird regelmäßig vorgesehen sein, muss aber nicht unbedingt gegeben sein. Alternativ kann im Rahmen der Ermittlung des Produktions-Ablaufplans dieser quasi unmittelbar im Rahmen der Ermittlung direkt an eine andere Einheit übertragen werden und dort erst gespeichert.

Der Produktions-Ablaufplan kann dabei beispielsweise wie im Rahmen der vorliegenden Beschreibung bereits an anderer Stelle näher ausgeführt ausgebildet und eingerichtet sein. Er kann z.B. eine Modulabfolge, jeweils auszuführende Produktions-Funktionen oder -Services, eine Zeitplanung, Produktionsparameter (z.B. CAD-Daten, Temperatur-Verläufe, Druck-Muster o.Ä.) umfassen.

Auch die Information über eine Reihenfolge von Produktionsmodulen kann wie in der vorliegenden Beschreibung an anderer Stelle bereits näher ausgeführt ausgebildet und eingerichtet sein. Insbesondere kann es sich bei der Reihenfolge von Produktionsmodulen um eine lückenlose Abfolge von aneinander grenzenden Produktionsmodulen handeln. Weiterhin kann aber auch eine prinzipielle Abfolge von Produktionsmodulen im Rahmen des Produktions-Ablaufplans vorgesehen sein, wobei innerhalb des Produktions-Ablaufplans noch keine oder zumindest keine vollständigen Informationen über eine Logistik zwischen den einzelnen Produktionsmodulen enthalten ist. Weiterhin kann innerhalb der Reihenfolge von Produktionsmodulen auch ein Produktionsmodul mehrfach enthalten sein.

Nachfolgend der Ermittlung des Produktions-Ablaufplans, oder auch unabhängig davon, kann vorgesehen sein, dass ein zeitlicher Ablauf ermittelt wird, nach welchem die Bearbeitung der Produkte durch die Produktionsmodule, beziehungsweise durch die Auswahl von Produktionsmodulen, erfolgt.

Dabei kann die Ermittlung des zeitlichen Ablaufs, nach welchem die Bearbeitung der Produkte durch die Produktionsmodule erfolgt, wie vorstehend beispielsweise im Rahmen der Erläuterung der Funktionalität der Produktions-Steuerungs-Einrichtung näher erläutert, ausgebildet und eingerichtet sein. Insbesondere kann die Ermittlung des zeitlichen Ablaufs, nach welchem die Bearbeitung der Produkte durch die Produktionsmodule erfolgt, eine "Verhandlung" über verfügbare Produktions-Kapazitäten, -Funktionalitäten und/oder - Zeitfenster mit den einzelnen Produktionsmodulen umfassen.

Weiterhin kann die Ermittlung beispielsweise eine so genannte "Ressourcen-Allokation" umfassen, mittels welcher im Rahmen der Ermittlung des zeitlichen Ablaufs der Bearbeitungsschritte durch die Produktionsmodule bestimmte Produktionsressourcen und/oder -Zeiten mit den einzelnen Produktionsmodulen quasi "vereinbart" werden. Dies kann beispielsweise durch Übertragung einer entsprechenden Informations-Nachricht über eine entsprechende Ressourcen-Forderung umfassen und durch eine entsprechende Bestätigungsnachricht von einem entsprechenden Produktionsmodul quasi bestätigt oder "quittiert" werden. Die entsprechenden Ressourcen - z.B. die Reservierung eines bestimmten Zeitabschnitts für die Bearbeitung oder Behandlung eines bestimmten Produkts - können dann z.B. im entsprechenden Produktionsmodul, z.B. in einer entsprechenden Planungs-Tabelle oder -Datenbank, hinterlegt und damit reserviert, fixiert und/oder blockiert werden.

Der ermittelte zeitliche Ablauf kann beispielsweise in einem Produktionsmodul, einer externen Einheit oder einem Produktionsplanungssystem gespeichert werden. Weiterhin können auch die jeweiligen, ein bestimmtes Modul betreffende Informationen, an das jeweilige Modul übertragen werden und dort gespeichert werden. Eine derartige Speicherung innerhalb der Module kann alternativ oder zusätzlich auch im Rahmen der "Ressourcen-Allokation" und/oder Quittierung entsprechender Ressourcen-Anforderungen, wie oben beispielhaft ausgeführt, geschehen.

Der Produktions-Ablaufplan kann weiterhin Informationen über an den jeweiligen Produktionsmodulen jeweils durchzuführende ein oder mehrere Produktionsfunktionen umfassen. Dies können beispielsweise Kennungen oder Informationen bezüglich der einzelnen Funktionalitäten, und/oder auch entsprechende Parameter bezügliche der Produktionsfunktion (z.B. geometrische Parameter, funktionale Parameter, qualitative Parameter, usw.) umfassen.

Weiterhin kann vorgesehen sein, dass das Produktions-Planungs-System im Rahmen oder auch vor der Ermittlung des Produktions-Ablaufplans Zugriff auf ein Begriffstransfer-Modul gemäß der vorliegenden Beschreibung hat beziehungsweise im Rahmen der Ermittlung auf ein derartiges Begriffstransfer-Modul zugreift.

Dabei kann beispielsweise vorgesehen sein, dass aus einer Produktionsinformation z.B. ein Begriff bezüglich eines bestimmten Produktionsschritts an das entsprechende Begriffs-transfer-Modul übertragen wird und von diesem beispielsweise ein oder mehrere damit assoziierte Begriffe im Rahmen der Produktions-Funktionalitäten von verfügbaren Produktionsmodulen zurückübertragen werden oder auch andersherum.

Weitere vorteilhafte Ausgestaltungen finden sich in den Unteransprüchen.

Nachfolgend wird die vorliegende Erfindung beispielhaft mit Bezug auf die beiliegenden Figuren näher erläutert.

Es zeigen:
- Figur 1:: Beispiel für eine Struktur eines beispielhaften aus Produktionsmodulen aufgebauten Produktionssystems;
- Figur 2:: detailliertes Beispiel für eine Datenstruktur eines Produktionsmoduls;
- Figur 3: schematische Darstellung eines weiteren beispielhaften Produktionssystems;
- Figur 4: Beispiel für den Ablauf einer BegriffsZuordnung im Rahmen einer Produktionsplanung,
- Figur 5: Beispiel für den Ablauf einer Zeitplanung einer Produktion.

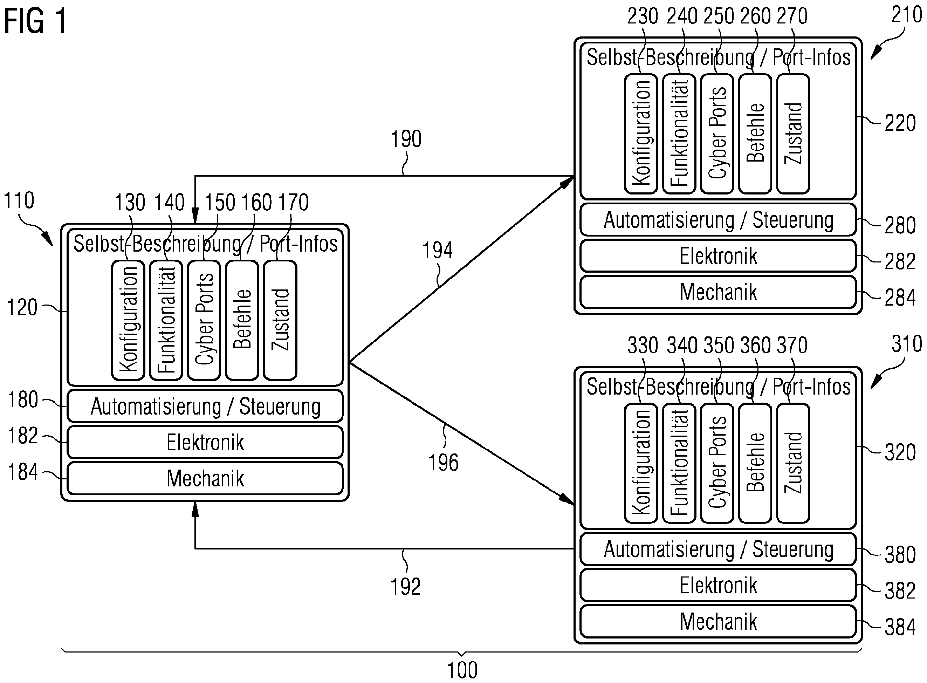

Fig. 1 zeigt einen schematischen Aufbau eines Produktionssystems 100 mit einem ersten Produktionsmodul 110, einem zweiten Produktionsmodul 210 sowie eine dritten Produktionsmodul 310, welche in Fig. 1 schematisch als Quadrate dargestellt sind.

Für jedes der Module 110, 210, 310 ist schematisch ein Aufbau der Module dargestellt. Dabei umfassen die Module jeweils einen Speicherbereich 120, 220, 320, wobei in dem Speicherbereich 120, 220, 320 der jeweiligen Module 110, 210, 310 jeweils eine Port-Informationen 150, 250, 350 bezüglich im jeweiligen Modul vorliegenden, so genannten "Cyber-Physical-Ports", gespeichert ist. Die in Figur 1 dargestellten Port-Informationen 150, 250, 350 sind Beispiele für Port-Informationen gemäß der vorliegenden Beschreibung.

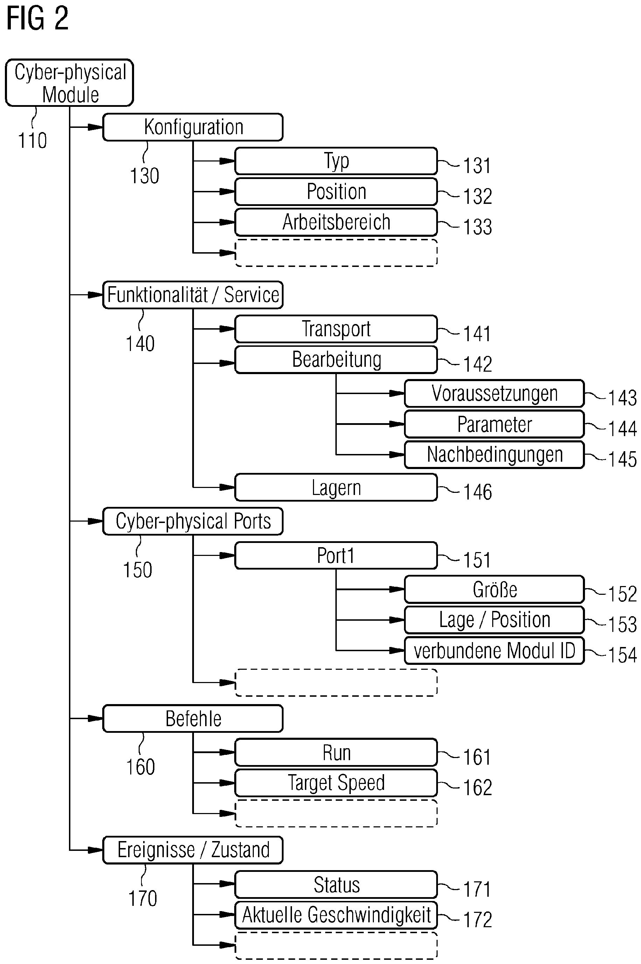

Weiterhin umfasst der Speicherbereich 120, 220, 320 der jeweiligen Produktionsmodule jeweils eine Konfigurationsinformation 130, 230, 330 bezüglich einer funktionalen sowie elektronischen, mechanischen und kommunikativen Konfigurationen und sowie Eigenschaften des jeweiligen Moduls. Weiterhin umfasst der Speicherbereich 120, 220, 320 der jeweiligen Module eine Funktionalitäts-Beschreibung 140, 240, 340 des jeweiligen Moduls, eine Beschreibung verfügbarer Befehle 160, 260, 360, sowie eine oder mehrere Zustandsinformationen 170, 270, 370 bezüglich des jeweiligen Moduls 110, 210, 310. Die Konfigurationsinformationen 130, 230, 330, die Funktionalitäts-Beschreibungen 140, 240, 340, die Beschreibungen verfügbarer Befehle 160, 260, 360 und Zustandsinformationen 170, 270, 370 sind jeweils Beispiele für Selbstbeschreibungs-Informationen gemäß der vorliegenden Beschreibung. Die vorstehend genannten Selbstbeschreibungs- beziehungsweise Port-Informationen werden im Zusammenhang mit Fig. 2 noch beispielhaft weiter erläutert.

Weiterhin umfasst jede der Produktionsmodule 110, 210,310 eine Automatisierungs- und/oder Steuereinrichtung 180, 280, 380 zur Automatisierung oder Steuerung beziehungsweise der Handhabung der verschiedenen Funktionalitäten und Services, welches das jeweilige Produktionsmodul 110, 210, 310 zur Verfügung stellt. Weiterhin ist in jedem der Produktionsmodule 110, 210, 310 eine oder mehrere Elektronikbaugruppen oder - module 182, 282, 382 vorhanden, welche zum Betrieb beispielsweise von Aktoren sowie anderen elektronischen, optischen und sonstigen Einrichtungen des Moduls 110, 210, 310 erforderlich sind beziehungsweise verwendet wird. Zudem umfasst jedes der Module 110, 210, 310 mechanische Elemente 184, 284, 384.

Die in Fig. 1 dargestellten Pfeile 190, 192, 194, 196 stellen einen beispielhaften Kommunikationsablauf bei Änderungen im ersten Produktionsmodul 110 dar. Dazu registriert sich beispielsweise das zweite Produktionsmodul 210 über eine entsprechende Nachricht 190 beim ersten Produktionsmodul 110 als "Subscriber", das heißt, als mit dem ersten Produktionsmodul 110 verbundenes Modul. Dieses Registrieren kann beispielsweise bei der Kopplung beziehungsweise unmittelbar nach der Kopplung beider Module oder auch später erfolgen. In gleicher Weise registriert sich das dritte Produktionsmodul 310 über eine entsprechende "Subscriber"-Nachricht 192 beim ersten Produktionsmodul 110. Bei Änderungen im ersten Produktionsmodul, beispielsweise einer Zustandsänderung von einem NormalZustand zu einem Stopp-Zustand, welcher dann in den ZustandsInformationen 170 des ersten Produktionsmoduls 110 gespeichert wird, schickt dann das erste Produktionsmodul 110 eine entsprechende Änderungsnachricht 194 an das zweite Produktionsmodul 210 und auch eine entsprechende Nachricht 196 an das dritte Produktionsmodul 310. Auf diese Weise sind das zweite und dritte Produktionsmodul 210, 310 über die Zustandsänderung im ersten Produktionsmodul 110 informiert und können dies beispielsweise bei der Koordination einer Produktionskette oder einer gemeinsamen Bearbeitung oder Behandlung eines Produkts berücksichtigen.

Über ein derartiges Kommunikationsschema kann im Prinzip dafür gesorgt werden, dass bei Änderungen in einem der Produktionsmodule 110, 210, 310 jeweils die damit unmittelbar oder auch mittelbar verbundenen Produktionsmodule informiert sind und dies im Rahmen des Zusammenwirkens innerhalb des Produktionssystems 100 berücksichtigt werden kann. Ein entsprechender "Subscription"-Vorgang kann dann sinngemäß genauso vom ersten und dritten Produktionsmodul 110, 310 zum zweiten Produktionsmodul 210 beziehungsweise vom ersten und zweiten Produktionsmodul 110, 210 zum dritten Produktionsmodul eingerichtet sein, so dass sich über einen solchen Mechanismus alle drei der in Fig. 1 dargestellten Module 110, 210, 310 gegenseitig über Änderungen jeweils entsprechend informieren.

Die Produktionsmodule 110, 210, 310 können dabei beispielsweise als so genannte "Cyber-Physical-Modules" (CPM), oder auch als so genannte "Cyber-Physical-Production-Modules" (CPPM) bezeichnet werden beziehungsweise sind als derartige Module ausgebildet und ausgestaltet. Das Produktionssystem 100 kann in diesem Zusammenhang beispielsweise auch als ein so genanntes "Cyber-Physical-System" (CPS) bezeichnet werden, beziehungsweise ist derart ausgebildet und eingerichtet.

Fig. 2 zeigt das Beispiel für einen schematischen Aufbau der in Fig. 1 dargestellten Speichereinheit 120 des ersten Produktionsmoduls 110. Dieser Selbstbeschreibungs- beziehungsweise Port-Informations-Speicher 120 umfasst eine Konfigurationsinformation 130, in der beispielsweise ein Modultyp 131, eine geometrische Lage oder Anordnung 132 des Moduls oder von Funktionselementen des Moduls sowie ein Arbeitsbereich 133 des Moduls 110 gespeichert ist. Dabei kann der "Typ" 131 beispielsweise aus einer entsprechende Kennung oder auch einer oder mehreren Funktionsbezeichnungen bestehen beziehungsweise derartige Informationen umfassen. In der Information über den Arbeitsbereich 133 kann beispielsweise ein räumlicher Bereich beschrieben werden, in welchem Produkte im entsprechenden Produktionsmodul 110 vorhanden sein können beziehungsweise, innerhalb welchem diese Produkte bewegt werden können. So kann beispielsweise ein Arbeitsbereich eines Transport- oder Förderbandes ein entlang des Transport- oder Förderbandes sich längs erstreckender Volumenbereich sein, in welchem das Produkt mit Hilfe des Transport- oder Förderbandes bewegt werden kann. Bei einer Bearbeitungsmaschine kann der Arbeitsbereich beispielsweise der Volumenbereich sein, in welchem ein Bearbeitungselement der Maschine auf ein darin befindliches Produkt einwirken kann. Entsprechende Arbeitsbereiche lassen sich für weitere Funktionalitäten im Rahmender vorstehend beschriebenen Produktionsfunktionen ermitteln.

Weiterhin umfasst der Speicherbereich 120 des ersten Produktionsmoduls 110 eine Funktionalitäts- und Service-Information 140, wobei diese Information weitere Informationen zu Transportmöglichkeiten 141 mit dem Modul, BearbeitungsMöglichkeiten 142 des Moduls oder auch Lager-Möglichkeiten 146 zur Ablage oder Speicherung von Produkten oder Materialien umfasst. Die Bearbeitungsinformationen 142 können beispielsweise weiterhin Informationen zu Voraussetzungen zur Verwendung der entsprechenden Bearbeitungsfunktionen 143, entsprechende Parameter, welche die Bearbeitungsfunktionen näher kennzeichnen 144 und/oder auch Nachbedingungen 145 umfassen, welche für eine Weiterbehandlung des Produkts nach der Bearbeitung charakterisierend beziehungsweise notwendig sind.

Ganz allgemein kann ein Produktionsmodul gemäß der vorliegenden Beschreibung jeweils auch mehrere der genannten Produktions-Funktionalitäten umfassen, wobei dann beispielsweise in einer entsprechenden Speichereinrichtung für jede der Funktionalitäten eine Information abgelegt werden kann beziehungsweise abgelegt ist. So kann beispielsweise ein Produktionsmodul mehrere Transportfunktionalitäten, beispielsweise über ein oder mehrere Transport- bzw. Förderbänder oder Roboterarme beziehungsweise eine Kombination davon aufweisen, verschiedene Bearbeitungsfunktionen aufweisen, sowie auch verschiedene Lagerungsmöglichkeiten aufweisen.

In der Speichereinrichtung 120 des Produktionsmoduls 110 ist weiterhin eine Port-Information 150 über einen so genannten "Cyber-Physical-Port" zu einem weiteren Produktionsmodul gespeichert. Dieser "Cyber-Physical-Port" kann sowohl Informationen über eine funktionale Zusammenarbeit von gekoppelten Produktionsmodulen, als auch Informationen über in den derart gekoppelten Modulen verfügbare Funktionalitäten umfassen.

So enthält die Port-Information 150 beispielsweise Informationen über einen ersten "Cyber-Physical-Port" 151 zu einem benachbarten, gekoppelten Produktionsmodul, beispielsweise dem zweiten Produktionsmodul 210 gemäß Fig. 1. Dabei ist in der entsprechenden Portinformation 151 beispielsweise eine Information über eine Größe des Wechselwirkungs- oder Übergabebereichs 152 zum zweiten Produktionsmodul, eine Lage oder Position des Übergabebereichs 153, sowie einer Kennung 154 des verbundenen Moduls 210, enthalten. Weiterhin kann beispielsweise eine Information über eine Funktionalität des zweiten Produktionsmoduls sowie Informationen über Funktionalitäten von weiteren, mit dem zweiten Produktionsmodul 210 verbundenen Produktionsmodulen in der entsprechenden Portinformation 151 gespeichert sein. Würde vom ersten Produktionsmodul 110 eine weitere unmittelbare Verbindung zu einem weiteren Produktionsmodul existieren, beispielsweise dem dritten Produktionsmodul 310 gemäß Fig. 1, so würde auch für diesen entsprechenden "Cyber-Physical-Port" zum dritten Produktionsmodul 310 eine entsprechende Port-Information in der allgemeinen Port-Information 150 abgelegt.

Weiterhin enthält der Speicherbereich 120 des ersten Produktionsmoduls 110 eine Information 160 über im Produktionsmodul verwendbare Befehle oder Kommandos zu dessen Steuerung. So ist in diesem Befehls-Speicher 160 beispielsweise Information zu einem Run-Befehl 161 oder auch zu einem Target-Speed-Befehl 162 niedergelegt, mit welchen diese Befehle mit entsprechenden verwendbaren Parametern definiert sind und von einem Benutzer des Systems zum Einrichten einer Steuerung für das Produktionsmodul 110 ausgelesen werden können.

Im Ereignis-/Zustandsinformations-Bereich 170 in der Speichereinrichtung 120 des ersten Produktionsmoduls 110 sind beispielsweise Informationen über den aktuellen Status des Produktionsmoduls 171 sowie beispielsweise über die aktuelle Geschwindigkeit eines Motors des Moduls 172 abgelegt.

Die Gesamtheit der im ersten Produktionsmodul 110 abgelegten Informationen gemäß Fig. 2 ermöglicht es, auch mit relativ geringer Einwirkung eines Benutzers, oder auch ohne Einwirkung eines Benutzers, eine Zusammenarbeit mehrerer derartiger Produktionsmodule zu organisieren und einen gemeinsamen Produktionsablauf solcher gekoppelter Produktionsmodule zu erwirken. Über die genannten Informationen ist es einem an ein solches Produktionsmodul gekoppeltes weiteres Modul möglich, sowohl Informationen über Funktionalitäten über die Geometrie, als auch über den Zustand und die Ansteuer- beziehungsweise Steuermöglichkeiten eines Moduls sowie die Kopplungsmöglichkeiten an das Modul zu erkennen und dies beispielsweise bei einem halbautomatisierten oder auch automatisierten Planungsprozess zu berücksichtigen.

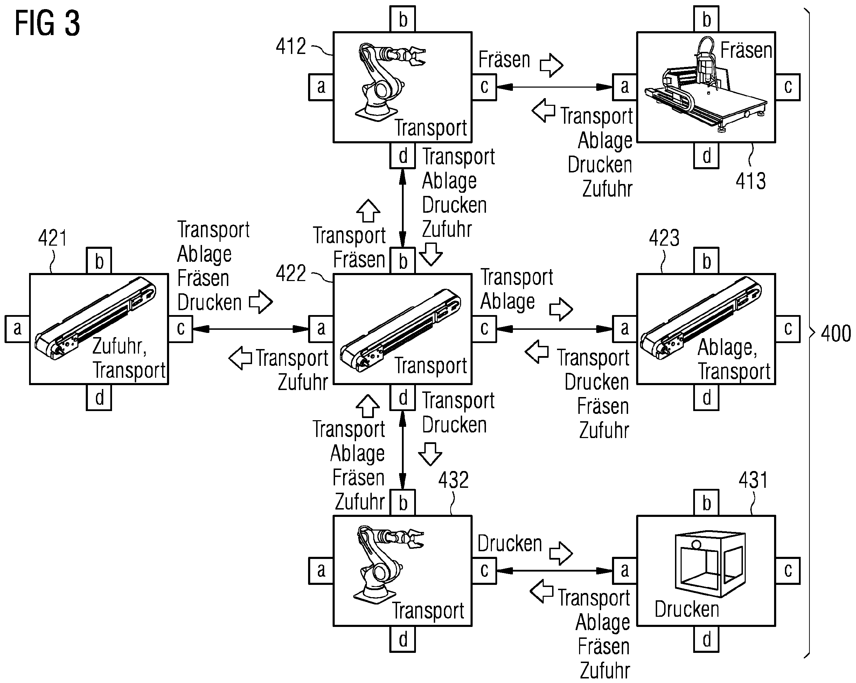

Fig. 3 stellt ein Produktionssystem 400 in einer funktionalen Darstellung dar. Das Produktionssystem 400 umfasst dabei einen 3D-Drucker 431, zwei Roboter 412, 432 sowie eine CNC-Maschine 413 (CNC: Computerized Numerical Control). Weiterhin umfasst das Produktionssystem eine Zufuhr und Transporteinheit 421 für ein Ausgangs-Produkt, ein Transport- oder Förderband 422 für ein in Bearbeitung befindliches Produkt sowie eine Transport- und Lagereinheit 423 für ein durch das Produktionssystem 400 hergestelltes Zwischen- oder Endprodukt.

Die Darstellung der einzelnen Produktionsmodule in Fig. 3 erfolgt symbolisch, wobei zu jedem der Produktionsmodule vier "Cyber-Physical-Ports" a, b, c, d als angehängte, kleine Quadrate dargestellt sind, welche einen möglichen oder auch existierenden "Cyber-Physical-Port" symbolisieren.

So hat beispielsweise das Förderband 422 vier existierende "Cyber-Physical-Ports" 422/a, 422/b, 422/c, 422/d. Dabei symbolisiert der "Cyber-Physical-Port" 422/a zum Zufuhr-Transport-Modul 421 den "Cyber-Physical-Port" zu diesem Modul. Die in Bezug auf diesen "Cyber-Physical-Port" 422/a gespeicherten Informationen umfassen auch sämtliche Funktionalitäten, welche über diesen "Cyber-Physical-Port" erreichbar sind. Diese erreichbaren Funktionalitäten sind in Fig. 3 als Text neben das jeweiligen quadratische Symbol des "Cyber-Physical-Ports" geschrieben. So enthält der "Cyber-Physical-Port" 422/a unter Anderem die Information, dass über diesen Port, das heißt diese Verbindung, zum Zufuhr/Transport-Modul, die Funktionalitäten: "Transport" und "Zufuhr" erreichbar sind, welche vom entsprechenden Modul 421 ausgeführt werden können. Über den Port 422/b des Transportmoduls 422 zum Roboter 412 sind beispielsweise die Funktionalitäten "Transport" und "Fräsen" verfügbar, welche dann in der entsprechenden Portinformation 422/b abgelegt sind. Dabei wird die Funktionalität "Transport" vom Roboter 412 durchgeführt, während die Funktionalität "Fräsen" von der mit dem Roboter 412 verbundenen CNC-Fräse 413 durchgeführt wird.

Über den Port 421/c des Zufuhr-, Transport-Moduls 421 sind auf diese Weise beispielsweise alle Funktionalitäten (außer der eigenen) des Produktionssystems 400, wie es in Fig. 3 dargestellt ist, verfügbar - also über die verschiedensten Wege die Funktionalitäten "Transport", "Ablage", "Fräsen" sowie "Drucken".

Auf diese Weise kann bei einem, in einem bestimmten Modul befindlichen Produkt, und bekannten nächsten erforderlichen Arbeitsschritten jeweils durch Analyse der Portinformationen des jeweiligen Moduls bei Bedarf ein Produktionsablauf zur weiteren Produktion des Produkts bestimmt werden.

Die Organisation der einzelnen in den Ports abgelegten Funktionsinformationen über die verbundenen Module, kann beispielsweise über einen entsprechenden Informations-Verteilungsschritt erreicht werden. Über einen, wie beispielsweise in Zusammenhang mit Fig. 1 erläuterten Änderungs-Weitergabe-Mechanismus können die jeweiligen Informationen dann aktuell gehalten werden.

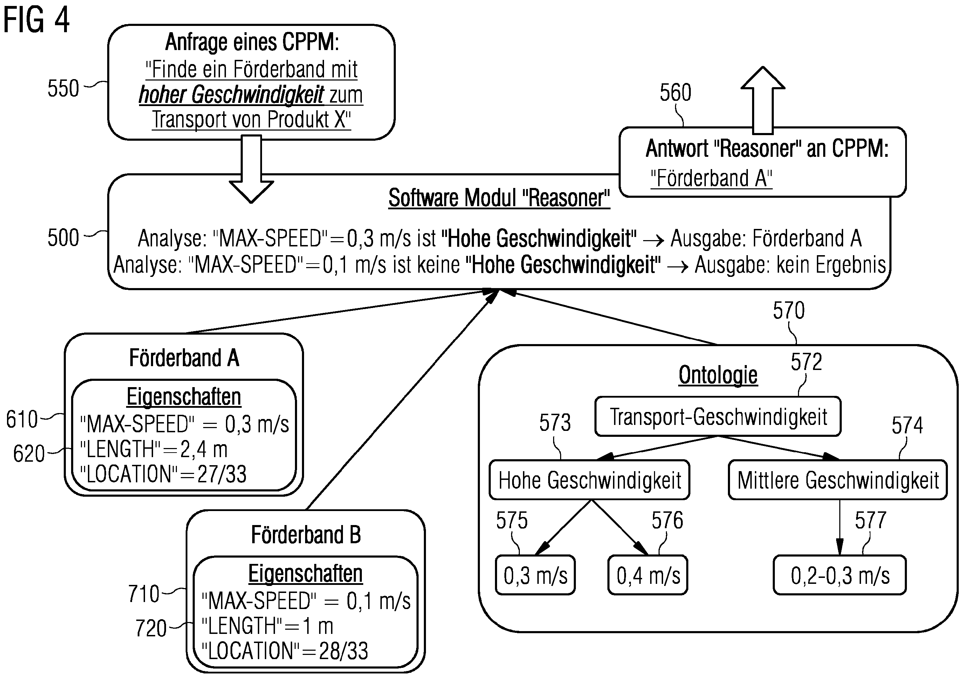

Figur 4 zeigt die Funktionalität eines so genannten "Reasoner" zum Abgleich von Anforderungen aus einem Produktionsplan für ein Produkt und Eigenschaften von einzelnen Produktionsmodulen z.B. so genannten "Cyber-Physical-Production-Modules" (CPPM). Ein solcher "Reasoner" ist ein Beispiel für ein Begriffs-Transfer-Modul gemäß der vorliegenden Beschreibung.

Im in Figur 4 dargestellten Beispiel liegt innerhalb eines Cyber-Physical-Production-Modules (CPPM) eine Produktions-Anweisung oder Produktions-Planung zur Herstellung eines Produkts vor. Im Rahmen dieser Produktion ist dadurch ein Transport- oder Förderband mit "hoher Geschwindigkeit" zum Transport eines bestimmten Produktes X gefordert. Das CPPM sendet eine Nachricht 550 mit einer entsprechenden Anfrage an den Reasoner 500.

Zur Analyse des Begriffs "hohe Geschwindigkeit" greift der Reasoner 500 auf eine Ontologie-Datenbank 570 zu, welche als Datenbank in einem NoSQL-Format gespeichert ist. Innerhalb der Ontologie sind dem Begriff "Transport-Geschwindigkeit" 572 ein Begriff "hohe Geschwindigkeit" 573 und weiterhin auch ein Begriff "mittlere Geschwindigkeit" 574 zugewiesen. Weiterhin ist im Rahmen der Ontologie 570 dem Begriff "hohe Geschwindigkeit" 573 die Geschwindigkeit "0,3 m/s" 575 zugewiesen und weiterhin auch die Geschwindigkeit "0,4 m/s" 576. Dem Begriff "mittlere Geschwindigkeit" 574 ist eine Geschwindigkeit zwischen "0,2 - 0,3 m/s" 577 zugewiesen. Über eine logische Kette führt die Auswertung der Ontologie-Datenbank 570 vom Begriff "Transport-Geschwindigkeit" 572 zur "hohe Geschwindigkeit" 573 und von dort weiterhin zur Geschwindigkeit 0,3 m/s 575 oder 0,4 m/s 576.

Ein in Figur zugrundeliegendes Produktionssystem umfasst ein erstes Förderband A 610 sowie ein zweites Förderband B 710, wobei das erste Förderband A 610 eine Eigenschafts-Datenbank 620 und das Förderband B 710 ebenfalls eine Eigenschafts-Datenbank 720 umfasst. Diese Eigenschafts-Datenbanken 620, 720 sind Beispiele für Selbstbeschreibungs-Informationen gemäß der vorliegenden Beschreibung.

In einem ersten Analyseschritt analysiert der "Reasoner" 500 das Förderband A 610 und stellt fest, dass die durch das Förderband A 610 gegebene Maximal-Geschwindigkeit einer "hohen Geschwindigkeit" entspricht und gibt als Ergebnis den Namen "Förderband A" aus.

In einer weiteren Analyse wird das Förderband B 710 in gleicher Weise analysiert, wobei anhand der Informationen aus der Ontologie-Datenbank 570 folgt, dass die Maximalgeschwindigkeit des Förderbandes B 710 nicht eine "hohe Geschwindigkeit" ist und so die Analyse ergebnislos verläuft. Als Gesamtinformation der Analyse schickt der Reasoner 500 dann eine Antwortnachricht 560 mit der Antwort "Förderband A" an das anfragende CPPM zurück. Eine entsprechende Planungseinrichtung innerhalb des CPPM kann dann diese Information verwenden, um den entsprechenden Transportschritt mittels Förderband A zu planen.

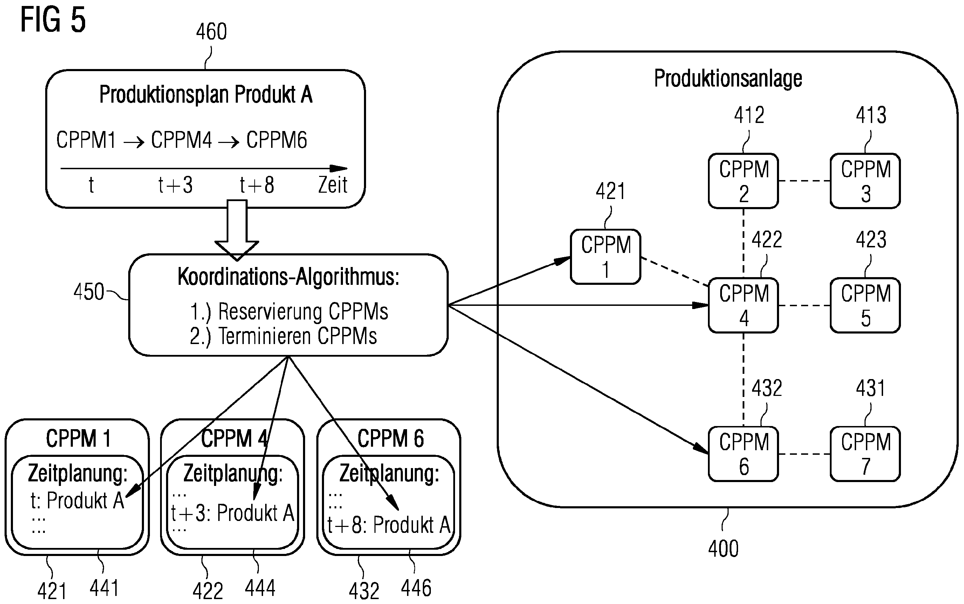

Figur 5 zeigt ein Beispiel für einen Koordinations-Algorithmus 450 zu einer Produktions-Ablauf-Zeitplanung innerhalb des bereits in Zusammenhang mit Figur 3 erläuterten Produktionssystems 400. Dabei entsprechen die Produktionsmodule 421, 412, 413, 422, 423, 432, 431 des Produktionssystems 400 sowie deren Kopplung den im Rahmen von Figur 3 erläuterten.

Für das Produktionssystem 400 liegt ein Produktionsplan 460 für ein Produkt A vor, aus welchem sich eine Reihenfolge einer Bearbeitung erst durch CPPM1 (Zufuhr-Transport- oder - Förderband) 421, nachfolgend durch CPPM4 (Transport- oder Förderband), 422, weiter nachfolgend CPPM6 (Roboter) 432 ergibt. Der Koordinations-Algorithmus 450, der ein Beispiel für eine Produktions-Steuerungs-Einrichtung oder ggf. auch eine Produktions-Planungs-Einrichtung gemäß der vorliegenden Beschreibung ist, fragt dann zuerst bei CPPM1 421 nach freien Zeiträumen für eine Bearbeitung von Produkt A an und erhält von diesem die Antwort, dass eine Behandlung von Produkt A zu einem Zeitpunkt t möglich wäre. Der Koordinations-Algorithmus 450 erkennt, dass dies im Rahmen des Produktionsablaufs möglich ist und reserviert in einem zweiten Kommunikationsschritt bei CPPM1 421 über eine entsprechende Reservierungs-Nachricht einen Zeitpunkt t für eine Bearbeitung des Produkts A. Dies ist in Figur 5 als Pfeile vom Koordinations-Algorithmus 450 zu CPPM1 dargestellt.

Von CPPM1 421 wird dies in einer eigenen Zeitplanungsdatei 441 entsprechend festgehalten, so dass bei einer nächsten Nachfrage der Zeitpunkt bzw. Zeitraum um t nicht mehr als freier Bearbeitungszeitpunkt bzw. -zeitraum verfügbar ist und CPPM1 bei entsprechender Nachfrage auch eine entsprechende Information ausgibt. Zur klareren Darstellung der Zeitplanungsdatei 441 von CPPM1 421 - und auch entsprechender Zeitplanungsdateien 444, 446 der anderen zwei betroffenen Module, CPPM4 422 und CPPM6 446, sind diese Module in Figur 5 im unteren linken Bereich nochmals vergrößert dargestellt.

Nachfolgend fragt der Koordinations-Algorithmus 450 bei CPPM4 422 nach den dort verfügbaren Zeiträumen für eine Bearbeitung von Produkt A an. Hierbei gibt CPPM4 beispielsweise verschiedene mögliche Zeitpunkte an, unter anderem auch ein Zeitpunkt t+3, welcher durch den Koordinations-Algorithmus 450 als der gemäß Produktionsplan 460 als der geeignetste erweist. Mittels einer entsprechenden Nachricht (in Fig. 5 wiederum durch entsprechende Pfeile symbolisiert) wird dann CPPM4 422 entsprechend terminiert und dann die Behandlung von Produkt A zum Zeitpunkt t+3 in einer Zeitplanungsdatenbank 444 von CPPM4 422 fixiert.

Entsprechend dieses Vorgehens wird dann weiterhin der Zeitpunkt t+8 für die Bearbeitung von Produkt A durch CPPM6 432 fixiert und in einer entsprechenden Zeitplanungsdatenbank 446 von CPPM6 432 festgehalten.

In einem weiteren Schritt werden die jeweiligen Zeitpunkte der Bearbeitung auch im Produktionsplan 460 für Produkt A hinzugefügt, wie dies in Figur 5 in Zusammenhang mit Produktionsplan 460 für Produkt A bereits eingetragen ist. Auf diese Weise wurde der Produktionsplan 460 zu einem Produktions-Zeitplan 460 weiterentwickelt.

## Patentansprüche

1. Produktionsmodul (110, 210, 310, 412, 413, 421, 422, 423, 431, 432, 610, 710) zur Durchführung einer Produktions-Funktion an einem Produkt,
wobei
das Produktionsmodul zur Kopplung mit einem zweiten Produktionsmodul (110, 210, 310, 412, 413, 421, 422, 423, 431, 432, 610, 710) ausgebildet und eingerichtet ist oder mit einem zweiten Produktionsmodul (110, 210, 310, 412, 413, 421, 422, 423, 431, 432, 610, 710) gekoppelt ist, wobei das zweite Produktionsmodul zur Durchführung einer zweiten Produktions-Funktion an dem Produkt ausgebildet und eingerichtet ist,
**dadurch gekennzeichnet,**
**dass** in einer Speichereinrichtung (120, 220, 320) des Produktionsmoduls eine Selbstbeschreibungs-Information (130, 140, 160, 170, 230, 240, 260, 270, 330, 340, 360, 370, 620, 720) bezüglich Eigenschaften des Produktionsmoduls gespeichert ist,
**dass** das Produktionsmodul zum Übertragen der Selbstbeschreibungs-Information oder Teilen der Selbstbeschreibungs-Information an eine weitere Einrichtung ausgebildet und eingerichtet ist,
**dass** die Selbstbeschreibungs-Information als eine NoSQL-Datenbank oder eine nicht-relationale Datenbank gespeichert oder speicherbar ist, und,
**dass** die Selbstbeschreibungs-Information des Produktionsmoduls eine Port-Information (150, 151, 152, 153, 154, 250, 350) bezüglich der Kopplung mit dem zweiten Produktionsmodul umfasst und weiterhin die Port-Information (150, 151, 152, 153, 154, 250, 350) bezüglich der Kopplung mit dem zweiten Produktionsmodul eine Information über die zweite Produktions-Funktion und/oder eine Kennung (154) des zweiten Produktionsmoduls umfasst,
wobei eine Ermittlung der Port-Information (150, 151, 152, 153, 154, 250, 350) bezüglich der Kopplung mit dem zweiten Produktionsmodul im Rahmen einer Kopplung mit dem zweiten Produktionsmodul selbsttätig erfolgt.

2. Produktionsmodul gemäß Anspruch 1,
**dadurch gekennzeichnet,**
**dass** die Selbstbeschreibungs-Information (130, 140, 160, 170, 230, 240, 260, 270, 330, 340, 360, 370, 620, 720) umfasst:
- eine Service Information (140, 141, 142, 143, 144, 145, 146, 240, 340) bezüglich der Produktions-Funktion,
- eine Konfigurations-Information (130, 131, 132, 133, 230, 330) bezüglich einer Lage und/oder Ausgestaltung des Produktionsmoduls,
- eine Fähigkeits-Information (140, 141, 142, 143, 144, 145, 146, 240, 340) bezüglich verfügbarer Funktionen und Services des Produktionsmoduls, welche eine Information über die Produktions-Funktion umfasst,
- eine Befehls-Information (160, 161, 162, 260, 360) bezüglich vom Produktionsmodul ausführbarer Befehle und einstellbarer Parameter, und/oder
- eine Zustands-Information (170, 171, 172, 270, 370) bezüglich eines Arbeitszustands des Produktionsmoduls.

3. Produktionsmodul gemäß Anspruch 1 oder 2,
**dadurch gekennzeichnet,**
**dass** das mit dem Produktionsmodul koppelbare oder gekoppelte zweite Produktionsmodul eine zweite Selbstbeschreibungs-Information (130, 140, 160, 170, 230, 240, 260, 270, 330, 340, 360, 370, 620, 720) bezüglich Eigenschaften des zweiten Produktionsmoduls umfasst, und
**dass** das Produktionsmodul zum Übertragen der Selbstbeschreibungs-Information oder Teilen der Selbstbeschreibungs-Information an das zweite Produktionsmodul und zum Empfang der zweiten Selbstbeschreibungs-Information oder Teilen der zweiten Selbstbeschreibungs-Information vom zweiten Produktionsmodul ausgebildet und eingerichtet ist.

4. Produktionsmodul gemäß einem der Ansprüche bis 3,
**dadurch gekennzeichnet,**
**dass** die Selbstbeschreibungs-Information als eine OWL- oder RDF-Datenbank und/oder eine SPARQL als Abfragesprache verwendende Datenbank gespeichert oder speicherbar ist.

5. Produktionsmodul gemäß einem der Ansprüche bis 4,
**dadurch gekennzeichnet,**
**dass** die Port-Information bezüglich der Kopplung mit dem zweiten Produktionsmodul Informationen bezüglich Eigenschaften von mit dem zweiten Produktionsmodul unmittelbar und/oder mittelbar verbundenen weiteren Produktionsmodulen (110, 210, 310, 412, 413, 421, 422, 423, 431, 432, 610, 710) umfasst, insbesondere bezüglich von Produktionsfunktionen der mit dem zweiten Produktionsmodul unmittelbar und/oder mittelbar verbundenen Produktionsmodule umfasst.

6. Produktionsmodul gemäß einem der vorstehenden Ansprüche,
**dadurch gekennzeichnet,**
**dass** das Produktionsmodul (110, 210, 310, 412, 413, 421, 422, 423, 431, 432, 610, 710) zur Kommunikation mit einer einem zu bearbeitenden Produkt zugeordneten Produkt-Datenverarbeitungseinrichtung und zum Empfang einer Produktions-Information bezüglich einer Herstellung eines Zwischen- oder Endprodukts ausgebildet und eingerichtet ist.

7. Produktionsmodul gemäß einem der vorstehenden Ansprüche,
**dadurch gekennzeichnet,**
**dass** das Produktionsmodul (110, 210, 310, 412, 413, 421, 422, 423, 431, 432, 610, 710) zur Speicherung einer Modul-Planungsinformation (441, 444, 446) ausgebildet und eingerichtet ist und insbesondere weiterhin zur Ausgabe einer Information bezüglich der Modul-Planungsinformation ausgebildet und eingerichtet ist.

8. Produktionssystem (100, 400) zur Herstellung eines Zwischen- oder Endprodukts, umfassend eine Mehrzahl von gemäß einem der vorstehenden Ansprüche untereinander gekoppelten Produktionsmodulen (110, 210, 310, 412, 413, 421, 422, 423, 431, 432, 610, 710), wobei jedes der Mehrzahl von Produktionsmodulen als Produktionsmodul gemäß einem der vorstehenden Ansprüche ausgebildet und eingerichtet ist.

9. Produktionssystem zur Herstellung eines Zwischen- oder Endprodukts, umfassend eine Mehrzahl von Produktionsmodulen (110, 210, 310, 412, 413, 421, 422, 423, 431, 432, 610, 710), wobei jedes der Mehrzahl von Produktionsmodulen zur Kopplung mit jeweils mindestens einem weiteren Produktionsmodul (110, 210, 310, 412, 413, 421, 422, 423, 431, 432, 610, 710) der Mehrzahl von Produktionsmodulen ausgebildet und eingerichtet ist,
wobei jeweils in einer Speichereinrichtung (120, 220, 320) in jedem der Produktionsmodule eine Selbstbeschreibungs-Information (130, 140, 160, 170, 230, 240, 260, 270, 330, 340, 360, 370, 620, 720) bezüglich Eigenschaften des betreffenden Produktionsmoduls gespeichert ist,
und wobei jedes der Produktionsmodule zum Übertragen der jeweiligen Selbstbeschreibungs-Information oder Teilen der jeweiligen Selbstbeschreibungs-Information an eine weitere Einrichtung ausgebildet und eingerichtet ist,
**dadurch gekennzeichnet,**
**dass** zumindest einzelne der Mehrzahl von Produktionsmodulen (110, 210, 310, 412, 413, 421, 422, 423, 431, 432, 610, 710) als Produktionsmodul gemäß einem der Ansprüche bis 7 ausgebildet und untereinander gekoppelt sind, und dass das Produktions-System ein Begriffstransfer-Modul (500) umfasst, wobei das Begriffstransfer-Modul (500) zur Zuordnung von Elementen einer Produktions-Information bezüglich der Herstellung des Zwischen- oder Endprodukts und Elementen der Selbstbeschreibungs-Informationen (130, 140, 160, 170, 230, 240, 260, 270, 330, 340, 360, 370, 620, 720) der Produktionsmodule eingerichtet und ausgebildet ist.

10. Produktionsmodul gemäß einem der Ansprüche bis 7,
**dadurch gekennzeichnet,**
**dass** das Produktionsmodul (110, 210, 310, 412, 413, 421, 422, 423, 431, 432, 610, 710) weiterhin eine Produktions-Planungs-Einrichtung zur Planung einer Herstellung eines Zwischen- oder Endprodukts mit einem Produktionssystem gemäß Anspruch 8 oder 9 umfasst,
wobei die Produktions-Planungs-Einrichtung zur Speicherung einer Produktions-Information eingerichtet und ausgebildet ist, wobei die Produktions-Information zur Herstellung des Zwischen- oder Endprodukts erforderliche Produktionsschritte umfasst, und wobei
die Produktions-Planungs-Einrichtung zum Empfang und/oder zur Speicherung von zumindest Teilen der Selbstbeschreibungs-Informationen (130, 140, 160, 170, 230, 240, 260, 270, 330, 340, 360, 370, 620, 720) einer Auswahl von Produktionsmodulen (110, 210, 310, 412, 413, 421, 422, 423, 431, 432, 610, 710) des Produktionssystems ausgebildete und eingerichtet ist, und weiterhin
die Produktions-Planungs-Einrichtung zum Ermitteln eines Produktions-Ablaufplans (460) für ein zu bearbeitendes Produkt eingerichtet und ausgebildet ist, wobei der Produktions-Ablaufplan (460) eine Information über eine Reihenfolge von Produktionsmodulen des Produktionssystems umfasst, welche ein Produkt zur Herstellung des Zwischen- oder Endprodukts durchlaufen soll oder durchläuft.

11. Produktionsmodul nach Anspruch 10,
**dadurch gekennzeichnet,**
**dass** das Produktions-Planungs-System weiterhin Zugriff auf ein Begriffstransfer-Modul (500) hat, wobei das Begriffstransfer-Modul zur Zuordnung von Elementen der Produktions-Information bezüglich der Herstellung des Zwischen- oder Endprodukts und Elementen der Selbstbeschreibungs-Information der Produktionsmodule eingerichtet und ausgebildet ist.

12. Produktionsmodul nach Anspruch 11,
**dadurch gekennzeichnet,**
**dass** das Begriffstransfer-Modul (500) eine Datenbank (570) umfasst, welche Elemente der Produktions-Information bezüglich der Herstellung des Zwischen- oder Endprodukts und Elemente der Selbstbeschreibungs-Information der Produktionsmodule umfasst, wobei diesen Elementen jeweils Assoziierungs-Informationen und/oder andere der Elemente zugeordnet sind.

13. Produktionsmodul gemäß einem der Ansprüche bis 7 oder einem der Ansprüche 10 bis 12,
**dadurch gekennzeichnet,**
**dass** das Produktionsmodul (110, 210, 310, 412, 413, 421, 422, 423, 431, 432, 610, 710) weiterhin eine Produktions-Steuerungs-Einrichtung (450) zum Einrichten und/oder Steuern einer Herstellung eines Zwischen- oder Endprodukts mit einem Produktionssystem gemäß Anspruch 8 oder 9 umfasst, wobei die Produktions-Steuerungs-Einrichtung (450) zur Speicherung eines Produktions-Ablaufplans (460) für ein zu bearbeitendes Produkt ausgebildet und eingerichtet ist, wobei der Produktions-Ablaufplan (460) eine Information über eine Reihenfolge von Produktionsmodulen des Produktionssystems umfasst, welche ein Produkt zur Herstellung des Zwischen- oder Endprodukts durchlaufen soll oder durchläuft, und wobei
die Produktions-Steuerungs-Einrichtung (450) zur Kommunikation mit zumindest einer Auswahl von Produktionsmodulen (110, 210, 310, 412, 413, 421, 422, 423, 431, 432, 610, 710) der Reihenfolgen von Produktionsmodulen ausgebildet und eingerichtet ist, und weiterhin
zur Ermittlung eines zeitlichen Ablaufs (460), mit welchem die Bearbeitung der Produkte durch die Produktionsmodule beziehungsweise die Auswahl von Produktionsmodulen erfolgt, ausgebildet und eingerichtet.

14. Produktionssystem gemäß Anspruch 8 oder 9,
**dadurch gekennzeichnet,**
**dass** das Produktionssystem (100, 400) mindestens ein Produktionsmodul gemäß einem der Ansprüche 10 bis 13 enthält.

15. Verfahren zur Planung einer Herstellung eines Zwischen- oder Endprodukts mit einem Produktionssystem (100, 400) gemäß Anspruch 8 oder 9, wobei
- eine Produktions-Information vorliegt, welche zur Herstellung des Zwischen- oder Endprodukts erforderliche Produktionsschritte umfasst,
- das Produktionssystem (100, 400) ein Produktionsmodul (110, 210, 310, 412, 413, 421, 422, 423, 431, 432, 610, 710) mit einer Produktions-Planungseinrichtung umfasst, welche gemäß einem der Ansprüche 10 bis 13 ausgebildet und eingerichtet ist, wobei die Produktions-Planungs-Einrichtung dieses Produktionsmoduls zur Produktionsplanung zur Planung der Herstellung des Zwischen- oder Endprodukts vorgesehen ist, und
- die Produktions-Planungs-Einrichtung des Produktionsmoduls zur Produktionsplanung Zugriff auf die Selbstbeschreibungs-Informationen (130, 140, 160, 170, 230, 240, 260, 270, 330, 340, 360, 370, 620, 720) der Produktionsmodule (110, 210, 310, 412, 413, 421, 422, 423, 431, 432, 610, 710) des Produktionssystems (100, 400) hat, **gekennzeichnet durch die Schritte,**
- Übertragen der Produktions-Information bezüglich der Herstellung des Zwischen- oder Endprodukts zur Produktions-Planungs-Einrichtung,
- Übertragen von zumindest Teilen der Selbstbeschreibungs-Informationen einer Auswahl von Produktionsmodulen des Produktionssystems zur Produktions-Planungs-Einrichtung,
- Ermitteln eines Produktions-Ablaufplans (460) für ein zu bearbeitendes Produkt, wobei der Produktions-Ablaufplan eine Information über eine Reihenfolge von Produktionsmodulen des Produktionssystems umfasst, welche ein Produkt zur Herstellung des Zwischen- oder Endprodukts durchlaufen soll oder durchläuft.

16. Verfahren nach Anspruch 15,
**dadurch gekennzeichnet,**
**dass** weiterhin im Rahmen oder nachfolgend der Ermittlung des Produktions-Ablaufplans (460) ein zeitlicher Ablauf ermittelt wird, nach welchem die Bearbeitung der Produkte durch die Produktionsmodule, beziehungsweise die Auswahl von Produktionsmodulen, erfolgt.

17. Verfahren nach Anspruch 15 oder 16,
**dadurch gekennzeichnet,**
**dass** der ermittelte Produktions-Ablaufplan (460) weiterhin Informationen über an den jeweiligen Produktionsmodulen jeweils durchzuführende ein oder mehreren Produktionsfunktionen umfasst.

18. Verfahren nach einem der Ansprüche 15 bis 17,
**dadurch gekennzeichnet,**
**dass** das Produktions-Planungs-System vor oder im Rahmen der Ermittlung des Produktions-Ablaufplans (460) auf ein Begriffstransfer-Modul (500) gemäß Anspruch 11 oder 12 zugreift.

## Claims

1. Production module (110, 210, 310, 412, 413, 421, 422, 423, 431, 432, 610, 710) for performing a production function on a product,
wherein
the production module is designed and set up for coupling to a second production module (110, 210, 310, 412, 413, 421, 422, 423, 431, 432, 610, 710) or is coupled to a second production module (110, 210, 310, 412, 413, 421, 422, 423, 431, 432, 610, 710), wherein the second production module is designed and set up for performing a second production function on the product,
**characterized**
**in that** a memory device (120, 220, 320) of the production module stores a piece of self-description information (130, 140, 160, 170, 230, 240, 260, 270, 330, 340, 360, 370, 620, 720) regarding properties of the production module,
**in that** the production module is designed and set up for transmitting the piece of self-description information or portions of the piece of self-description information to a further device,
**in that** the piece of self-description information is stored or storable as a NoSQL database or a nonrelational database, and in that the piece of self-description information of the production module comprises a piece of port information (150, 151, 152, 153, 154, 250, 350) regarding the coupling to the second production module and additionally the piece of port information (150, 151, 152, 153, 154, 250, 350) regarding the coupling to the second production module comprises a piece of information about the second production function and/or an identifier (154) of the second production module
wherein an ascertainment of the piece of port information (150, 151, 152, 153, 154, 250, 350) regarding the coupling to the second production module takes place automatically as part of a coupling to the second production module.

2. Production module according to Claim 1, **characterized in that** the piece of self-description information (130, 140, 160, 170, 230, 240, 260, 270, 330, 340, 360, 370, 620, 720) comprises:
- a piece of service information (140, 141, 142, 143, 144, 145, 146, 240, 340) regarding the production function,
- a piece of configuration information (130, 131, 132, 133, 230, 330) regarding a situation and/or embodiment of the production module,
- a piece of capability information (140, 141, 142, 143, 144, 145, 146, 240, 340) regarding available functions and services of the production module, which piece of capability information comprises a piece of information about the production function,
- a piece of instruction information (160, 161, 162, 260, 360) regarding instructions executable by the production module and adjustable parameters, and/or
- a piece of state information (170, 171, 172, 270, 370) regarding a work state of the production module.

3. Production module according to Claim 1 or 2, **characterized in that** the second production module couplable or coupled to the production module comprises a second piece of self-description information (130, 140, 160, 170, 230, 240, 260, 270, 330, 340, 360, 370, 620, 720) regarding properties of the second production module, and
**in that** the production module is designed and set up for transmitting the piece of self-description information or portions of the piece of self-description information to the second production module and for receiving the second piece of self-description information or portions of the second piece of self-description information from the second production module.

4. Production module according to one of Claims 1 to 3, **characterized**
**in that** the piece of self-description information is stored or storable as an OWL or RDF database and/or a database using SPARQL as query language.

5. Production module according to one of Claims 1 to 4, **characterized in that** the piece of port information regarding the coupling to the second production module comprises information regarding properties of further production modules (110, 210, 310, 412, 413, 421, 422, 423, 431, 432, 610, 710) directly and/or indirectly connected to the second production module, particularly regarding production functions of the production modules directly and/or indirectly connected to the second production module.

6. Production module according to one of the preceding claims, **characterized**
**in that** the production module (110, 210, 310, 412, 413, 421, 422, 423, 431, 432, 610, 710) is designed and set up for communication with a product data processing device associated with a product to be conditioned and for receiving a piece of production information regarding manufacture of an intermediate product or end product.

7. Production module according to one of the preceding claims, **characterized**
**in that** the production module (110, 210, 310, 412, 413, 421, 422, 423, 431, 432, 610, 710) is designed and set up for storing a piece of module planning information (441, 444, 446) and is particularly additionally designed and set up for outputting a piece of information regarding the piece of module planning information.

8. Production system (100, 400) for manufacturing an intermediate product or end product, comprising a plurality of production modules (110, 210, 310, 412, 413, 421, 422, 423, 431, 432, 610, 710) coupled among one another according to one of the preceding claims, each of the plurality of production modules being designed and set up as a production module according to one of the preceding claims.

9. Production system for manufacturing an intermediate product or end product, comprising a plurality of production modules (110, 210, 310, 412, 413, 421, 422, 423, 431, 432, 610, 710), wherein each of the plurality of production modules is designed and set up for coupling to at least one respective further production module (110, 210, 310, 412, 413, 421, 422, 423, 431, 432, 610, 710) of the plurality of production modules,
wherein a respective memory device (120, 220, 320) in each of the production modules stores a piece of self-description information (130, 140, 160, 170, 230, 240, 260, 270, 330, 340, 360, 370, 620, 720) regarding properties of the relevant production module,
and wherein each of the production modules is designed and set up for transmitting the respective piece of self-description information or portions of the respective piece of self-description information to a further device,
**characterized**
**in that** at least some of the plurality of production modules (110, 210, 310, 412, 413, 421, 422, 423, 431, 432, 610, 710) are designed as a production module according to one of Claims 1 to 7 and are coupled among one another, and
**in that** the production system comprises a term transfer module (500), wherein the term transfer module (500) is set up and designed for associating elements of a piece of production information regarding the manufacture of the intermediate product or end product and elements of the self-description information (130, 140, 160, 170, 230, 240, 260, 270, 330, 340, 360, 370, 620, 720) of the production modules.

10. Production module according to one of Claims 1 to 7, **characterized**
**in that** the production module (110, 210, 310, 412, 413, 421, 422, 423, 431, 432, 610, 710) additionally comprises a production planning device for planning manufacture of an intermediate product or end product using a production system according to Claim 8 or 9,
wherein the production planning device is set up and designed for storing a piece of production information, the piece of production information comprising production steps required for manufacturing the intermediate product or end product, and wherein
the production planning device is designed and set up for receiving and/or storing at least portions of the self-description information (130, 140, 160, 170, 230, 240, 260, 270, 330, 340, 360, 370, 620, 720) of a selection of production modules (110, 210, 310, 412, 413, 421, 422, 423, 431, 432, 610, 710) of the production system, and additionally
the production planning device is set up and designed for ascertaining a production flowchart (460) for a product to be conditioned, wherein the production flowchart (460) comprises a piece of information about an order of production modules of the production system through which a product is intended to or does pass for the manufacture of the intermediate product or end product.

11. Production module according to Claim 10,
**characterized**
**in that** the production planning system additionally has access to a term transfer module (500), the term transfer module being set up and designed for associating elements of the piece of production information regarding the manufacture of the intermediate product or end product and elements of the piece of self-description information of the production modules.

12. Production module according to Claim 11, **characterized in that** the term transfer module (500) comprises a database (570) that comprises elements of the piece of production information regarding the manufacture of the intermediate product or end product and elements of the piece of self-description information of the production modules, wherein each of these elements have associated association information and/or other elements from the elements.

13. Production module according to one of Claims 1 to 7 or one of Claims 10 to 12, **characterized**
**in that** the production module (110, 210, 310, 412, 413, 421, 422, 423, 431, 432, 610, 710) additionally comprises a production control device (450) for setting up and/or controlling manufacture of an intermediate product or end product using a production system according to Claim 8 or 9,
wherein the production control device (450) is designed and set up for storing a production flowchart (460) for a product to be conditioned, wherein the production flowchart (460) comprises a piece of information about an order of production modules of the production system through which a product is intended to or does pass for the manufacture of the intermediate product or end product, and wherein
the production control device (450) is designed and set up for communication with at least one selection of production modules (110, 210, 310, 412, 413, 421, 422, 423, 431, 432, 610, 710) in the orders of production modules, and additionally designed and set up for ascertaining a timing (460) with which the conditioning of the products by the production modules or the selection of production modules takes place.

14. Production system according to Claim 8 or 9, **characterized**
**in that** the production system (100, 400) contains at least one production module according to one of Claims 10 to 13.

15. Method for planning manufacture of an intermediate product or end product using a production system (100, 400) according to Claim 8 or 9, wherein
- a piece of production information is available that comprises production steps required for manufacturing the intermediate product or end product,
- the production system (100, 400) comprises a production module (110, 210, 310, 412, 413, 421, 422, 423, 431, 432, 610, 710) having a production planning device which is designed and set up according to one of Claims 10 to 13, wherein the production planning device of this production module for production planning is provided for planning the manufacture of the intermediate product or end product, and
- the production planning device of the production module for production planning has access to the self-description information (130, 140, 160, 170, 230, 240, 260, 270, 330, 340, 360, 370, 620, 720) of the production modules (110, 210, 310, 412, 413, 421, 422, 423, 431, 432, 610, 710) of the production system (100, 400), **characterized by** the steps of
- transmitting the piece of production information regarding the manufacture of the intermediate product or end product to the production planning device,
- transmitting at least portions of the self-description information of a selection of production modules of the production system to the production planning device,
- ascertaining a production flowchart (460) for a product to be conditioned, wherein the production flowchart comprises a piece of information about an order of production modules of the production system through which a product is intended to or does pass for the manufacture of the intermediate product or end product.

16. Method according to Claim 15, **characterized in that** additionally during or after the ascertainment of the production flowchart (460) a timing is ascertained according to which the conditioning of the products by the production modules, or the selection of production modules, takes place.

17. Method according to Claim 15 or 16, **characterized in that** the ascertained production flowchart (460) additionally comprises information about one or more production functions to respectively be performed on each of the respective production modules.

18. Method according to one of Claims 15 to 17, **characterized in that** the production planning system accesses a term transfer module (500) according to Claim 11 or 12 before or during the ascertainment of the production flowchart (460).

## Revendications

1. Module de production (110, 210, 310, 412, 413, 421, 422, 423, 431, 432, 610, 710) destiné à exercer une fonction de production sur un produit,
dans lequel ledit module de production est conçu et configuré pour le couplage avec un second module de production (110, 210, 310 412, 413, 421, 422, 423, 431, 432, 610, 710), ou est couplé avec un deuxième module de production (110, 210, 310, 412, 413, 421, 422, 423, 431, 432, 610, 710), dans lequel le deuxième module de production est conçu et configuré afin d'exercer une deuxième fonction de production sur le produit,
**caractérisé en ce que**,
dans un moyen de stockage (120, 220, 320) du module de production, une information d'auto-description (130, 140, 160, 170, 230, 240, 260, 270, 330, 340, 360, 370, 620, 720) relative aux propriétés du module de production est mise en mémoire,
le module de production est conçu et configuré afin de transférer l'information d'auto-description ou des parties de l'information d'auto-description vers un autre dispositif,
les informations d'auto-description sont sauvegardées ou peuvent être sauvegardées en tant que base de données NoSQL ou base de données non relationnelle, et,
les informations d'auto-description du module de production contiennent des informations sur le port (150, 151, 152, 153, 154, 250, 350) en ce qui concerne le couplage avec le deuxième module de production et incluent en outre les informations sur le port (150, 151, 152, 153, 154, 250, 350) en ce qui concerne le couplage avec le second module de production, des informations concernant la seconde fonction de production et/ou comprennent un identifiant (154) du deuxième module de production,
de sorte qu'une détermination des informations sur le port (150, 151, 152, 153, 154, 250, 350) en ce qui concerne le couplage avec le second module de production s'effectue automatiquement dans le cadre d'un couplage avec le second module de production.

2. Module de production selon la revendication 1,
**caractérisé en ce que**,
l'information d'auto-description (130, 140, 160, 170, 230, 240, 260, 270, 330, 340, 360, 370, 620, 720) comprend :
- une information de service (140, 141, 142, 143, 144, 145, 146, 240, 340) à propos de la fonction de production,
- une information de configuration (130, 131, 132, 133, 230, 330) à propos d'une position et/ou une configuration du module de production,
- une information de capacité (140, 141, 142, 143, 144, 145, 146, 240, 340) à propos des fonctions et services disponibles du module de production, qui comprend des informations sur la fonction de production,
- des informations de commande (160, 161, 162, 260, 360) à propos des instructions exécutables par le module de production et des paramètres réglables, et/ou
- des informations d'état (170, 171, 172, 270, 370) à propos d'un état de fonctionnement du module de production.

3. Module de production selon la revendication 1 ou 2,
**caractérisé en ce que**,
le second module de production pouvant être couplé ou couplé avec le module de production comporte une seconde information d'auto-description (130, 140, 160, 170, 230, 240, 260, 270, 330, 340, 360, 370, 620, 720) à propos des propriétés du deuxième module de production, et
le module de production transmet l'information d'auto-description ou des parties d'informations d'auto-description au second module de production et qu'il est conçu et créé afin de recevoir la seconde information d'auto-description ou des parties de la seconde information d'auto-description de la part du second module de production.

4. Module de production selon l'une des revendications 1 à 3,
**caractérisé en ce que**,
l'information d'auto-description est sauvegardée ou peut être sauvegardée en tant que base de données OWL et/ou RDF, ou en tant que base de données utilisée comme langage de requête.

5. Module de production selon l'une des revendications 1 à 4,
**caractérisé en ce que**,
les informations sur les ports à propos du couplage avec le deuxième module de production comprend des informations à propos des caractéristiques des autres modules de production (110, 210, 310, 412, 413, 421, 422, 423, 431, 432, 610, 710) directement et/ou indirectement connectés au deuxième module de production, en particulier en ce qui concerne les fonctions de production des modules de production directement et/ou indirectement connectés au deuxième module de production.

6. Module de production selon l'une des revendications précédentes,
**caractérisé en ce que**,
le module de production (110, 210, 310, 412, 413, 421, 422, 423, 431, 432, 610, 710) est créé et configuré afin de communiquer avec un dispositif de traitement de données associé à un produit à traiter, et afin de recevoir une information de production à propos de la fabrication d'un produit intermédiaire ou fini.

7. Module de production selon l'une des revendications précédentes,
**caractérisé en ce que**,
le module de production (110, 210, 310, 412, 413, 421, 422, 423, 431, 432, 610, 710) est conçu et configuré afin de stocker une information de planification de module (441, 444, 446), et en particulier conçu et configuré par ailleurs afin de fournir une information à propos des informations de planification de module.

8. Système de production (100, 400) pour la fabrication d'un produit intermédiaire ou fini, comprenant une pluralité de modules de production (110, 210, 310, 412, 413, 421, 422, 423, 431, 432, 610, 710) couplés les uns aux autres selon l'une des revendications précédentes, dans lequel chacun de la pluralité de modules de production est conçu et configuré en tant que module de production conformément à l'une des revendications ci-dessus.

9. Système de production pour la fabrication d'un produit intermédiaire ou fini, comprenant une pluralité de modules de production (110, 210, 310 412, 413, 421, 422, 423, 431, 432, 610, 710), dans lequel chacun de la pluralité de modules de production est conçu et configuré afin d'être couplé avec au moins un autre module de production (110, 210, 310, 412, 413, 421, 422, 423, 431, 432, 610, 710) de la pluralité de modules de production,
dans lequel dans un dispositif de stockage respectif (120, 220, 320) est sauvegardé dans chacun des modules de production une information d'auto-description (130, 140, 160, 170, 230, 240, 260, 270, 330, 340, 360, 370, 620, 720) à propos des propriétés du module de production,
et dans lequel chacun des modules de production est conçu et configuré afin de transmettre l'information d'auto-description respective ou des parties de l'information d'auto-description respectives à un autre dispositif,
**caractérisé en ce que**,
au moins certains de la pluralité des modules de production (110, 210, 310, 412, 413, 421, 422, 423, 431, 432, 610, 710) sont conçus et configurés en tant que module de production selon l'une des revendications 1 à 7 et couplés les uns aux autres, et que le système de production comporte un module de transfert de terme (500), ce module de transfert de terme (500) est conçu et configuré afin d'affecter des éléments d'une information de production relative à la fabrication du produit intermédiaire ou fini et des éléments des informations d'auto-description (130, 140, 160, 170, 230, 240, 260, 270, 330, 340, 360, 370, 620, 720) des modules de production.

10. Module de production selon l'une des revendications 1 à 7,
**caractérisé en ce que**,
le module de production (110, 210, 310, 412, 413, 421, 422, 423, 431, 432, 610, 710) comprend par ailleurs un dispositif de planification de la production en vue de la planification d'une fabrication d'un produit intermédiaire ou fini avec un système de production selon la revendication 8 ou 9,
dans lequel le dispositif de planification de la production est conçu et configuré en vue de la sauvegarde d'une information de production dans lequel l'information de production comprend les étapes de production requises permettant de fabriquer le produit intermédiaire ou fini, et que
le dispositif de planification de la production est conçu et configuré pour la réception et/ou la sauvegarde d'au moins des parties de l'information d'auto-description (130, 140, 160, 170, 230, 240, 260, 270, 330, 340, 360, 370, 620, 720) provenant d'une sélection de modules de production (110, 210, 310, 412, 413, 421, 422, 423, 431, 432, 610, 710) du système de production, et par ailleurs
le dispositif de planification de la production est conçu et configuré afin de déterminer un plan de déroulement de la production (460) pour un produit à traiter, ce plan de déroulement de la production (460) comportant une information à propos d'une série de modules de production du système de production qu'un produit doit traverser ou traverse pour la fabrication du produit intermédiaire ou fini.

11. Module de production selon la revendication 10,
**caractérisé en ce que**,
le système de planification de la production a accès par ailleurs à un module de transfert de terme (500), ce module de transfert de terme étant conçu et configuré pour l'affectation d'éléments de l'information de production à propos de la fabrication du produit intermédiaire ou fini et des éléments de l'information d'auto-description des modules de production.

12. Module de production selon la revendication 11,
**caractérisé en ce que**,
le module de transfert de terme (500) comporte une base de données (570) qui contient des éléments de l'information de production à propos de la fabrication du produit intermédiaire ou fini et des éléments de l'information d'auto-description des modules de production, des informations d'association et/ou un autre des éléments étant respectivement affectés à ces éléments.

13. Module de production selon l'une des revendications 1 à 7, ou selon l'une quelconque des revendications 10 à 12,
**caractérisé en ce que**,
le module de production (110, 210, 310, 412, 413, 421, 422, 423, 431, 432, 610, 710) comprend en outre un dispositif de pilotage de la production (450) permettant d'aménager et/ou de piloter la fabrication d'un produit intermédiaire ou fini avec un système de production selon la revendication 8 ou 9,
dans lequel ledit dispositif de pilotage de la production (450) est conçu et configuré pour la sauvegarde d'un plan de déroulement de la production (460) d'un produit à traiter,
dans lequel ce plan de déroulement de la production (460) comprend une information à propos d'une séquence des modules de production du système de production qu'un produit doit suivre ou suit pour la fabrication du produit intermédiaire ou fini, et dans lequel
le dispositif de pilotage de la production (450) est conçu et configuré pour la communication avec au moins une sélection de modules de production (110, 210, 310, 412, 413, 421, 422, 423, 431, 432, 610, 710) des séquences de modules de production, et dans lequel
il est conçu et configuré par ailleurs afin de déterminer une séquence chronologique (460) dans laquelle le traitement des produits est effectué par les modules de production ou bien par la sélection de modules de production.

14. Système de production selon la revendication 8 ou 9,
**caractérisé en ce que**,
le système de production (100, 400) comprend au moins un module de production selon l'une des revendications 10 à 13.

15. Procédé de planification d'une fabrication d'un produit intermédiaire ou fini avec un système de production (100, 400) selon la revendication 8 ou 9, dans lequel
- une information de production est disponible, information qui comprend les étapes de fabrication requises pour la production du produit intermédiaire ou fini,
- ce système de production (100, 400) comporte un module de production (110, 210, 310, 412, 413, 421, 422, 423, 431, 432, 610, 710) muni d'un dispositif de planification de la production qui est conçu et configuré selon l'une des revendications 10 à 13, dans lequel le dispositif de planification de la production de ce module de production est prévu pour la planification de la production afin de planifier la fabrication du produit intermédiaire ou fini, et
- le dispositif de planification de la production du module de production a accès aux informations d'auto-description (130, 140, 160, 170, 230, 240, 260, 270, 330, 340, 360, 370, 620, 720) des modules de production (110, 210, 310, 412, 413, 421, 422, 431, 432, 610, 710) du système de production (100, 400) pour la planification de la production, **caractérisés par** les étapes suivantes :
- transmission des informations de production relatives à la fabrication du produit intermédiaire ou fini au dispositif de planification de la production,
- transmission d'au moins une partie des informations d'auto-description d'une sélection de modules de production du système de production vers le dispositif de planification de la production,
- détermination d'un plan de déroulement de la production (460) pour un produit à traiter, ce plan de déroulement de la production comprenant une information à propos d'une séquence de modules de production du système de production qu'un produit doit suivre ou suit pour la fabrication du produit intermédiaire ou fini.

16. Procédé selon la revendication 15,
**caractérisé en ce que** par ailleurs,
dans le cadre ou à la suite de la détermination du plan de déroulement de la production (460), une séquence chronologique est déterminée, selon laquelle est effectué le traitement des produits par les modules de production, ou la sélection des modules de production.

17. Procédé selon la revendication 15 ou 16,
**caractérisé en ce que**,
le plan de déroulement de la production ainsi déterminé (460) comprend en outre des informations à propos d'une ou de plusieurs fonction(s) de production à exécuter sur les modules de production respectifs.

18. Procédé selon l'une des revendications 15 à 17,
**caractérisé en ce que**,
avant ou dans le contexte de la détermination du plan de déroulement de la production (460), le système de planification de la production fait appel à un module de transfert de terme (500) selon la revendication 11 ou 12.
